(19) Europäisches Patentamt / European Patent Office / Office européen des brevets

(11) EP 2 482 647 B1

(12) # EUROPÄISCHE PATENTSCHRIFT

(45) Veröffentlichungstag und Bekanntmachung des Hinweises auf die Patenterteilung:
**27.05.2015 Patentblatt 2015/22**

(21) Anmeldenummer: **10749837.0**

(22) Anmeldetag: **30.08.2010**

(51) Int Cl.:
***A01N 25/30*** *(2006.01)* ***A01N 43/16*** *(2006.01)*
***A01N 43/653*** *(2006.01)* ***A01N 59/02*** *(2006.01)*

(86) Internationale Anmeldenummer:
**PCT/EP2010/062600**

(87) Internationale Veröffentlichungsnummer:
**WO 2011/039014 (07.04.2011 Gazette 2011/14)**

(54) **VERWENDUNG VON SOPHOROLIPIDEN IN KOMBINATION MIT PESTIZIDEN ALS ADJUVANT/ ADDITIV FÜR DEN PFLANZENSCHUTZ UND DEN INDUSTRIELLEN NON-CROP BEREICH**

USE OF SOPHOROLIPIDS IN COMBINATION WITH PESTICIDES AS ADJUVANTS FOR CROP PROTECTION AND INDUSTRIAL NON-CROP APPLICATIONS

UTILISATION DES SOPHOROLIPIDES COMME ADJUVANTS DANS DES COMBINAISONS AVEC DES PESTICIDES POUR LE PROTECTION DES PLANTES ET DES APPLICATIONS INDUSTRIELLES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009 DE 102009045077**

(43) Veröffentlichungstag der Anmeldung:
**08.08.2012 Patentblatt 2012/32**

(73) Patentinhaber: **Evonik Degussa GmbH**
**45128 Essen (DE)**

(72) Erfinder:
- **GIESSLER-BLANK, Sabine**
  **44227 Dortmund (DE)**
- **SCHILLING, Martin**
  **53115 Bonn (DE)**
- **THUM, Oliver**
  **40880 Ratingen (DE)**
- **SIEVERDING, Ewald**
  **55578 St. Johann (DE)**

(56) Entgegenhaltungen:
**WO-A1-2006/096912** **US-A- 4 216 311**
**US-A- 5 326 407** **US-A1- 2007 191 292**

- **INGE N A VAN BOGAERT ET AL: "Microbial production and application of sophorolipids", APPLIED MICROBIOLOGY AND BIOTECHNOLOGY, SPRINGER, BERLIN, DE, Bd. 76, Nr. 1, 3. Mai 2007 (2007-05-03), Seiten 23-34, XP019538805, ISSN: 1432-0614, DOI: DOI: 10.1007/S00253-007-0988-7**
- **NITSCHKE ET AL: "Biosurfactants in food industry", TRENDS IN FOOD SCIENCE AND TECHNOLOGY, ELSEVIER SCIENCE PUBLISHERS, GB, Bd. 18, Nr. 5, 29. April 2007 (2007-04-29) , Seiten 252-259, XP022051786, ISSN: 0924-2244, DOI: DOI:10.1016/J.TIFS. 2007.01.002**
- **DAVILA A M; MARCHAL R; VANDECASTEELE J P: "Sophorose lipid fermentation with differentiated substrate supply for growth and production phases", APPLIED MICROBIOLOGY AND BIOTECHNOLOGY, Bd. 47, Nr. 5, 1. Mai 1997 (1997-05-01), Seiten 496-501, XP003001802, Springer Berlin / Heidelberg DOI: 10.1007/s002530050962**
- **Jeneil Biosurfactant Co., LLC: "JBR425 Product Data Sheet", , 16. August 2001 (2001-08-16), Seiten 1-5, XP007916130, Gefunden im Internet: URL:http://web.archive.org/web/20050308124 017/biosurfactant.com/downloads/jbr425pds. pdf [gefunden am 2010-12-07]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 482 647 B1

- **Environmental Protection Agency (EPA): "Rhamnolipid Biosurfactant: Exemption from the Requirement of a Tolerance", U.S.A. Federal Register - Rules and Regulations, 31. März 2004 (2004-03-31), Seiten 16796-16800, XP007916132, Gefunden im Internet: URL:http:// edocket.access.gpo.gov/2004/pdf /04-6933.pdf [gefunden am 2010-12-07]**
- **G MICHAEL BLACKBURN ET AL: 'Strain Effects in Acyl Transfer Reactions. Part III. Hydroxide and Buffer-catalysed Hydrolysis of Small and Medium King Lactones' JOURNAL OF THE CHEMICAL SOCIETY, PERKIN TRANSACTIONS II, [Online] 01 Januar 1974, U.K., Seiten 377 - 382, XP055068924 Gefunden im Internet: <URL:http:// pubs.rsc.org/en/content/article pdf/ 1974/p2/p29740000377> [gefunden am 2013-07-01]**
- **HUISGEN R ET AL: "Die konfiguration der carbonestergruppe und die sondereigenschaften der lactone", TETRAHEDRON, ELSEVIER SCIENCE PUBLISHERS, AMSTERDAM, NL, vol. 6, no. 3, 1 January 1959 (1959-01-01) , pages 253-267, XP026658740, ISSN: 0040-4020, DOI: 10.1016/0040-4020(59)80006-5 [retrieved on 1959-01-01]**


Bemerkungen:

Die Akte enthält technische Angaben, die nach dem Eingang der Anmeldung eingereicht wurden und die nicht in dieser Patentschrift enthalten sind.

## Beschreibung

Die Erfindung betrifft den Einsatz von Sophorolipiden bzw. deren Zusammensetzungen als Formulierungsadditiv und/oder Tankmischungsadditiv (auch Adjuvant genannt) von Pestiziden bzw. Pestizidmischungen.

Im Pflanzenschutz, bei Schädlingsbekämpfungsmitteln und auch im industriellen non-crop Bereich werden oft zur Verbesserung der biologischen Wirksamkeit solcher Pestizide bzw. Pestizidmischungen sogenannte Adjuvantien (oder Adjuvants) oder auch Hilfsmittel bzw. Zusatzstoffe eingesetzt. Die Wirksamkeit wird häufig auch als Effektivität bezeichnet. Das Pesticides Safety Directorate (PSD, der ausführende Bereich der Health and Safety Executive, einer nicht-staatlichen, öffentlichen Vereinigung in Großbritannien) definiert ein Adjuvant als eine Substanz, die neben Wasser, nicht selbst als Pestizid wirksam ist, aber die Effektivität eines Pestizides erhöht bzw. unterstützt. (http://www.pesticides.gov.uk/approvals). Diese werden entweder der wässrigen Spritzbrühe kurz vor dem Ausbringen und Aufsprühen zugesetzt (als Tankmischungsadditiv) oder direkt in Pflanzenschutzmittelformulierungen eingebaut. Bei der Verwendung des Wortes Adjuvant werden oft in Patenten oder der Literatur als Synonym die Begriffe Tensid oder Netzmittel verwendet, die jedoch viel zu weitreichend sind und eher als Oberbegriff gedeutet werden können.

Aufgrund der hier avisierten Verwendung wird auf den Begriff Adjuvant zurückgegriffen, da hierdurch besser die Funktion der Sophorolipide beschrieben wird. Sophorolipide, wie später aufgezeigt wird, benetzen/spreiten kaum. Im Gegensatz dazu zeichnet viele der im Pflanzenschutz bekannten Netzmittel oder Tenside ein sehr hohes Spreitverhalten aus, dazu gehören beispielsweise Trisiloxane.

In der Praxis gibt es zahlreiche Pflanzenschutzwirkstoffe, die nur mit Hilfe von Adjuvants eine akzeptable Effektivität, also eine praxisrelevante Wirkung erreichen. Die Adjuvantien helfen hier die Schwächen des Wirkstoffes auszugleichen, wie zum Beispiel die UV-Empfindlichkeit von Avermectinen (werden durch ultraviolette Strahlung zerstört) oder die Wasserinstabilität von Sulfonylharnstoffen. Neuere Wirkstoffe sind in der Regel nicht wasserlöslich und, um sich daher effektiv auf einem target=Zielorganismus=Pflanzen verbreiten zu können, sind Adjuvantien für die wässrige Sprühbrühe unerlässlich, um auf dem Wege der physikalischen Beeinflussung der wässrigen Lösungen die schlechte Benetzung von Oberflächen auszugleichen. Zudem helfen Adjuvantien technische Anwendungsprobleme, wie geringe Wasseraufwandmengen, unterschiedliche Wasserqualitäten und den Trend erhöhter Auftragsgeschwindigkeiten, zu überwinden. Die Erhöhung der Pestizidwirksamkeit sowie der Ausgleich von Schwächen der Pflanzenschutzmittel durch Adjuvantien wird allgemein als Effektivitätssteigerung der Pflanzenschutzmittelanwendung bezeichnet.

Der Nicht-Fachmann könnte vermuten, dass alle kommerziell verfügbaren Netzmittel/Tenside (beispielsweise im Kosmetiksektor oder im Bereich der Haushaltsreiniger) eine Effektivitätssteigerung von Pestiziden hervorrufen. Das ist jedoch nicht der Fall, wie auch in vielen Publikationen festgestellt wurde (siehe z.B. in Pesticide Formulation and Adjuvant Technology, edited by Chester L. Foy and David W. Pritchard. CRC Press LLC, 1996, Seiten 323-349).

Es ist also überraschend und nicht offensichtlich, dass Sophorolipide die Effektivität von Pestiziden steigern, sich also als Adjuvantien verhalten.

Einige Veröffentlichungen lehren, dass bestimmte Glycolipide, wie Rhamnolipide, selbst eine intrinsische pestizide Wirkung ausüben können (US 2005/0266036 oder auch Yoo DS, Lee BS, Kim EK (2005), Characteristics of microbial biosurfactant as an antifungal agent against plant pathogenic fungus. J Microbiol Biotechnol 15:1164-1169). Daher ist festzustellen, dass in dieser Patentanmeldung nicht Adjuvantien im Sinne der Definition des UK-PSD beschrieben werden.

US 2005/0266036 A1 beschreibt biologische Netzmittel, die durch Mikroben hergestellt werden, für den Einsatz gegen Schädlinge, z.B. von Fadenwürmern. Hierbei werden die Netzmittel oder die Mikroorganismen, die die Netzmittel produzieren quasi als Biopestizide direkt auf den Schädlingen platziert, um diese direkt zu bekämpfen. Beispiele werden nur angegeben für den Einsatz von Rhamnolipiden gegen Hausfliegen, Schaben und Fadenwürmer, sowie gegen existente Pilzsporen auf Kürbis. Die Einsatzkonzentration des biologischen Netzmittels, in diesem Falle eines Rhamnolipids, war bei Herbiziden mit 5 Gew.-% in der Spritzbrühe sehr hoch. In einer solch hohen Anwendungskonzentration werden selbst Pflanzenschutzmittelwirkstoffe nicht eingesetzt. Meist (es gibt jedoch auch andere Anwendungskonzentrationen) werden ca. 1 l/ha an Pflanzenschutzformulierung (die maximal 500 g/l an Wirkstoff enthält) mit einer Wassermenge von ca. 250 l/ha eingesetzt. Dieses entspricht einer max. Konzentration von ca. 0,4 Gew.-%. Eine Aussage zur kontrollierten und/oder selektiven Schädlingsbekämpfung mit praxisrelevanter Wirksamkeit sowie zur vorbeugenden, das heisst zur protektiven Wirkung, wird in der oben genannten US Patentanmeldung jedoch nicht gemacht.

Protektiv bedeutet, dass die Pestizid/Adjuvantkombination auf den Zielorganismus aufgetragen wird, wenn die Krankheit oder der Schadorganismus noch nicht aufgetreten ist (protektiv = schützende Ausbringung vor dem Auftreten von Schädlingen oder Krankheiten). Protektive Anwendungen sind insbesondere für Fungizide, aber auch für Insektizide und Akarizide von Bedeutung.

Aus US 2005/0266036 A1 ist nicht ersichtlich, ob Rhamnolipide die Wirkung von Herbiziden auch verstärken, wenn sie in einer selektiven Dosierung (also als Adjuvant) eingesetzt werden. Selektive Dosierungen sind solche, bei denen das Glycolipid selbst keine Kontrolle (Schädigung) des Schadorganismus (wie Unkraut, Insekt, Pilz oder dergleichen Schadorganismus) verursacht.

In der Anmeldung US2005/0266036 wird beschrieben, dass die dort verwendeten Bio-Tenside, speziell Rhamnolipide, aufgrund ihrer zellwandpenetrierenden Wirkung eine pestizide Wirksamkeit aufzeigen. Solche penetrationsfördernden Stoffe sind in der Tat oft für Pflanzenschutzmittel notwendig, um einen Schadorganismus zu kontrollieren, der sich schon im pflanzlichen Gewebe befindet, was als kurative Wirkung bezeichnet wird. Aus der oben genannten Patentanmeldung lässt sich jedoch in keiner Weise ableiten, und es ist auch nicht ersichtlich, dass Glycolipide auch die Wirkung von Pflanzenschutzmitteln, so sie damit kombiniert würden, protektiv wirken würden oder sogar wesentlich verbessern würden. Im Pflanzenschutzbereich werden meist Kontaktmittel wie zum Beispiel das Fungizid Schwefel zum protektiven Schutz verwendet. Diese Wirkstoffe wirken nur über Kontakt, d. h. die Schädlinge müssen getroffen werden. Für den kurativen Schutz hingegen werden meist systemisch wirkende Wirkstoffe wie z.B. Rimsulfuron (aus der Gruppe der Sulfonylharnstoffe) oder Epoxyconazol (aus der Gruppe der Triazol-Fungizide) verwendet. Diese Art von Wirkstoffen wird von der Pflanze aufgenommen und im Pflanzensaft transportiert. Schädlinge fressen oder saugen an Pflanzen und nehmen so das Mittel auf.

Synergismus wird hierbei so verstanden, dass die Wirkung der Kombination von Pestizid und Adjuvant größer ist, als die zu erwartende additive Wirkung der beiden Einzelkomponenten (s. Colby-formel: Colby S.R. 1967. Calculating synergistic and antagonistic responses of herbicide combinations. Weeds 15:20-22). Zu einer solchen synergistischen Wirkung im Zusammenspiel von Pestizid und Sophorolipiden sind im Stand der Technik keine Belege zu finden.

Zur Anwendung kommen im Pflanzenschutz, bei der Schädlingsbekämpfung und im industriellen Bereich chemische oder biologische Pflanzenschutzmittel (im Folgenden auch Pestizide genannt) oder Pestizidgemische. Dieses können sein, zum Beispiel Herbizide, Fungizide, Insektizide, Wachstumsregulatoren, Molluskizide, Bakterizide, Viridizide, Mikronährstoffe sowie biologische Pflanzenschutzmittel auf Basis von Naturstoffen oder lebenden oder ver- bezw. bearbeiteten Mikroorganismen. Pestizide Wirkstoffe sind im Zusammenhang mit Ihren Einsatzgebieten z.B. im 'The Pesticide Manual', 14th edition, 2006, The British Crop Protection Council, aufgelistet; biologische Wirkstoffe sind z.B. im 'The Manual of Biocontrol Agents', 2001, The British Crop Protection Council angegeben. Pestizid wird im Weiteren immer als Sammelbegriff verwendet.

Als Tankmischungsadditive werden vielfach alkoxylierte Trisiloxantenside eingesetzt, die die statische Oberflächenspannung von Spritzbrühen oder Wasser signifikant stärker erniedrigen, als in der Vergangenheit verwendete organische Tenside wie zum Beispiel Nonylphenolethoxylate. Trisiloxantenside haben die allgemeine Struktur $Me_3SiO$-SiMeR-$OSiMe_3$, wobei der Rest R ein Polyetherradikal darstellt. Die Verwendung von superspreitenden Trisiloxantensiden, wie z.B. dem BREAK-THRU® S-240, Evonik Goldschmidt GmbH, in Kombination mit einem Pestizid führt zu einer Verbesserung der Pestizidaufnahme durch die Pflanze und allgemein zu einer Steigerung von dessen Wirksamkeit oder dessen Effektivität.

In US 6,734,141 wird beschrieben, dass für diese Effektivitätssteigerung speziell eine geringe Oberflächenspannung und nicht unbedingt die Spreitung verantwortlich ist. In den meisten Patenten wird unter dem Begriff Oberflächenspannung immer die statische Oberflächenspannung verstanden. Beispielsweise bei Trisiloxanen liegt die statische Oberflächenspannung bei ca. 20 bis 25 mN/m.

Trisiloxantenside sind allerdings in vielen Staaten als gesundheitsschädlich eingestuft was bei der Registrierung als Bestandteil von Pflanzenschutzmitteln als Ausschlusskriterium bewertet wird. Viele Tankmischungsadditive, speziell ethoxylierte Alkohole oder Alkylpolyglykoside, bringen beim Einrühren Spritzbrühen stark zum Schäumen, welches bei der Anwendung im Feld ggf. zu Problemen führen kann. Allgemein sind synthetische Netzmittel in der Nachweispflicht, dass sie, um eine Registrierung als Adjuvant bei den nationalen Behörden zu erlangen, keine Rückstände im Boden hervorzurufen. Diese Rückstandsproblematik, die in den meisten Ländern nur für Pestizidwirkstoffe besteht, wird immer mehr auch auf traditionelle Adjuvantien angewendet. Biologische Netzmittel, da biologisch abbaubar, würde diese Problematik nicht betreffen was einen starken Vorteil für diese Anwendung darstellt.

Unter Glycolipiden versteht man eine Klasse chemischer Verbindungen, die aus einem hydrophilen Kohlenhydrat- und einem hydrophoben Lipidteil zusammengesetzt sind und die aufgrund ihrer amphiphilen Natur grenzflächenaktiv sind, bzw. tensidische Eigenschaften haben und deshalb auch als Biotenside bzw. Biosurfactants bezeichnet werden. Häufig handelt es sich um hydroxylierte Fettsäuren, die durch eine glykosidische Bindung mit einem Zuckerrest verknüpft sind. Zu dieser Verbindungsklasse gehören auch Produkte des mikrobiellen Stoffwechsels. Beispiele hierfür sind Rhamnolipide (RL), Sophorolipide (SL) und Mannosylerythritollipide (MEL), die jeweils von Bakterien (z.B. Pseudomonas aeruginosa), Hefen (z.B. Candida bombicola) oder Hefen und höheren Pilzen (z.B. Candida antarctica und Pseudozyma aphidis) synthetisiert werden.

Die biotechnologische Synthese solcher Verbindungen ist schon seit längerer Zeit bekannt und geeignete Stämme und Fermentationsbedingungen sind eingehend untersucht (z.B. Mukherjee, S. et al. - 2006, Towards commercial production of biosurfactants, Trends in Biotechnology, Vol. 24, No. 11). In letzter Zeit ist das Interesse an dieser Verbindungsklasse im Rahmen der Nachhaltigkeitsdiskussion jedoch stark gestiegen, da deren Herstellung aus nachwachsenden Rohstoffen unter schonenden Bedingungen erfolgen kann.

Grundsätzlich werden dem jeweiligen Mikroorganismus hierfür während der Fermentation als hydrophiles Substrat ein verstoffwechselbares Kohlenhydrat (z.B. ein Mono- oder ein Disaccharid) und als hydrophobes Substrat ein

Kohlenwasserstoff, Fettalkohol, eine Fettsäure, ein Triglycerid oder entsprechende Mischungen zur Verfügung gestellt und durch diesen in die entsprechende Zielverbindung umgewandelt. Hierbei kann die Herkunft beider Substrate stark variieren, da notwendige Elemente des Zielmoleküls bei Bedarf auch durch den Stoffwechsel des Mikroorganismus synthetisiert werden können, wodurch ein sehr breites Spektrum an Kohlenhydrat- sowie Kohlenwasserstoffquellen zugänglich wird (K. Muthusamy et al. - 2008, Properties, commerical production and applications, Current Science, Vol. 94, No. 6, S. 736-747). Beispiele für mögliche hydrophobe Substrate sind längerkettige Kohlenwasserstoffe, pflanzliche oder tierische Öle, freie Fettsäuren oder Fettsäurederivate (vgl. EP 1 953 237 A1, Ester verschiedener Kettenlängen etc.), sowie Fettalkohole. Als hydrophile Kohlenstoffquelle wird meistens Glucose verwendet, es werden jedoch in Abhängigkeit vom eingesetzten Organismus oft auch andere Zucker wie beispielsweise Lactose und Saccharose akzeptiert (von Boegart et al. - 2006, Microbial production and application of sophorolipids, Applied Microbiology and Biotechnology, Vol. 76).

Eine weitere Möglichkeit der strukturellen Diversifizierung und einer damit einhergehenden Erweiterung der funktionellen Eigenschaften ist die anschließende chemische oder biochemische Modifizierung der mikrobiell erzeugten Glycolipide. Auch hierfür sind verschiedene Methoden beschrieben, beispielsweise in US 2007/027106-A1 - Charged Sophorolipids and sophorolipid containing compounds oder in US 2005/164955A1 - Antifungal properties of various form of sophorolipids oder in Bisht, K.S. et al. - 1999, Enzymemediated regioselective acylation of SLs, The journal of organic chemistry, 64, S. 780-789; Azim, A. et al. - 2006, Amino acid conjugated sophorolipids, Bioconjugate Chemistry, 17, S. 1523-1529). Eine einfache Methode ist beispielsweise die basenkatalysierte Verseifung oder Veresterung mit aliphatischen Alkoholen verschiedener Kettenlängen. Eine interessante Methode Sophorolipide mit kurzen hydrophoben Resten herzustellen wurde kürzlich ebenfalls in der EP 1 953 237 A1 veröffentlicht. Hierbei werden Fettsäureanaloga als hydrophobes Substrat gefüttert, die beispielsweise Amid-, Ester- oder Doppelbindungen enthalten und nachträglich chemisch, hydrolytisch oder ozonolytisch gespalten werden können, um kurzkettigere hydrophobe Reste zu erhalten.

Die Reduktion des Wasseranteils in Sophorolipid Rohprodukten, beispielsweise durch Destillation, führt zu technischen Problemen während der Aufarbeitung, da die Produkte sehr hochviskos werden. Dieses Problem konnte durch den Zusatz von schon in geringer Konzentration viskositätsverringernden, schwerflüchtigen Polyolen gelöst werden, siehe US 4,197,166 Dehydrating purification process for a fermentation product.

In der Fachliteratur sind Glycolipide mit den Vertretern Rhamnolipide, Trehaloselipide und Sophorolipide als biologische Tenside bekannt (Desai JD und Banat IM. Microbial Production of Surfactants and their Commercial Potential. Mycrobiology and Molicular Biology Reviews, March 1997, S. 47-64.). So werden diese zum Beispiel zur Bodensanierung verwendet (s. Master Thesis Özlem Zenginyürrek, Izmir 2002, Izmir Institute of Technology: Title: Effects of biosurfactants on remediation of soils contaminated with pesticides; oder Food Technology and Biotechnology (2001), 39 (4), 295-304). In diesen Veröffentlichungen wird auch der Abbau von Pestiziden, z.B. von Endosulfan oder Metolachlor in Böden beschrieben. Hierbei werden die biologischen Netzmittel direkt auf den Boden aufgetragen.

Meistens werden in der Literatur sowie in Patenten mit biologischen Netzmitteln Rhamnolipide in Zusammenhang gebracht. Diese sind jedoch als gesundheitsgefährdend gekennzeichnet und können laut Sicherheitsdatenblättern ernste Augenschäden verursachen.

Der Trend im Agrobereich geht immer mehr zu toxikologisch unbedenklicheren Additiven und Adjuvantien. Außerdem wird die Herstellung von Rhamnolipiden dadurch erschwert, dass es während der fermentativen Produktion zu einer starken Schaumbidlung kommt und bisher eine effiziente biotechnologische Produktion nur mit potentiell pathogenen Stämmen der Gattung *Pseudomonas* durchführbar ist. Daher wurden Rhamnolipide im Rahmen dieser Erfindung nicht weiter verfolgt.

MEL (Mannosyl Erythritol Lipide) sind weitere Lipide, die als Adjuvantien in Frage kommen würden. Da sie vom Molekül her jedoch sehr hydrophob sind und daher wenn überhaupt nur in Wasser dispergierbar sind, wäre Ihre Anwendbarkeit auf ölbasierte Formulierungen beschränkt, da eine Vorraussetzung für die Verwendung als Tankmischungsadditiv ist, dass Moleküle wasserlöslich sind. MELs könnten daher bevorzugt nur in Kombination mit Co-Tensiden verwendet werden.

In PCT/US2005/046426 (WO2006/069175) wurden Sophorolipide als Antipilzmittel beschrieben, jedoch nicht im Zusammenhang mit Pflanzenschutz oder non-crop Applikationen. Die Eigenschaft als Antipilzmittel wird im Kosmetiksektor bzw in der Medizin genutzt (K. Kim et. Al.Journal of Microbiology and Biotechnology (2002), 12(2), 235-241). Im Kosmetiksektor werden biologische Netzmittel zumeist als Emulgatoren für Öl-in-Wasser Emulsionen verwendet (I. van Bogaert et. Al; Appl. Microbiol Biotechnology (2007) 76: S. 23-34). Bogaert et al. berichten auch über die kommerzielle Verwendung von biologischen Netzmitteln, speziell Sophorolipiden, in Haushaltsreinigern. In US 4,216,311 wird die Verwendung von Sophorolipiden, namentlich des Methylesters, als verbesserndes Additiv für agrochemische Wirkstoffe angegeben. Es wird über die gute Wasserlöslichkeit und die guten Emulgatoreigenschaften berichtet.

Pflanzenschutzmittelformulierungen, die zur Verwendung meist vor dem üblichen Aussprühen über Düsen mit Wasser verdünnt werden, enthalten neben der wirksamen Pestizidkomponente oder Behandlungskomponente (Aktivstoff oder auch Wirkstoff genannt) auch andere Hilfsmittel, wie beispielsweise Emulgatoren, Verdicker, Dispergierhilfsstoffe, Antifrostmittel, Entschäumer, Biozide und/oder oberflächenaktive Substanzen; dem Formulierungsfachmann sind

solche Stoffe bekannt.

Die Art der Formulierung wird durch die Kulturpflanze, das Anbaugebiet sowie den Anwender beeinflusst. Aufgrund der Vielfalt an physikalisch-chemischen Eigenschaften der verschiedenen Pestizidwirkstoffe existiert auf dem Markt eine große Zahl von verschiedenen flüssigen aber auch festen Formulierungstypen. Aufgrund der Formulierungsadditive, speziell des Adjuvants, ergeben sich bestimmte Anwendungseigenschaften wie Retention, Penetration, Regenfestigkeit und Spreitverhalten. Durch eine spezielle Formulierung soll gewährleistet werden, dass die geringst mögliche Menge Wirkstoff gleichmäßig über eine große Fläche verteilt werden kann (Reduzierung der Aufwandmengen zum Schutze des Verbrauchers und der Umwelt), allerdings unter Gewährleistung weiterhin maximaler Leistung und Wirksamkeit. Weit verbreitete, hier nur beispielhaft aufgeführte, Formulierungstypen sind: Suspensionskonzentrate, Kapselsuspensionen, Emulsionskonzentrate, Wasserlösliche Konzentrate, Öldispersionen, Suspoemulsionen, Emulsionen in Wasser, wasserdispergierbare Granulate oder Pulver. Die möglichen Formulierungstypen und -arten sollen nicht auf die hier beschriebenen begrenzt werden.

Solche Wirkstoffe werden oft einem Tank mit Wasser als Inhalt zugegeben, um die konzentrierte Formulierung des Wirkstoffes vor dem Aussprühen zu verdünnen und den Pflanzen verträglich zu machen. Tankmischungsadditive (auch Zusatzstoffe oder Adjuvantien genannt) werden dem Wasser in demselben Tank separat vor oder nach der Wirkstoffformulierung zugegeben und werden über Rühren mit der gesamten sogenannten Spritzbrühe verteilt.

Aktivstoffe (Wirkstoffe) sind solche, die in den individuellen Ländern für die Anwendung zu Pflanzen und Kulturen zugelassen und/oder registriert, und/oder gelistet sind, um Pflanzen gegen Schaden zu schützen, oder um den Ertragsverlust bei einer Kultur zu vermeiden bzw. zu reduzieren. Solche Aktivstoffe oder Wirkstoffe können synthetischer Art, wie auch biologischer Art sein. Solche Wirkstoffe können auch Extrakte oder Naturstoffe sein, oder antagonistisch aktive Organismen. Sie werden gewöhnlich auch als Pestizide bezeichnet. Die Pestizide, die nach ihrem Anwendungsgebiet im Pflanzenschutz benannt sind, schließen beispielsweise folgende Klassen ein: Akarizide (AC), Algizide (AL), Attraktanzien (AT), Repellentien (RE), Bakterizide (BA), Fungizide (FU), Herbizide (HE), Insektizide (IN), Mittel gegen Schnecken Molluskizide (MO), Nematizide (NE), Rodentizide (RO), Sterilisierungsmittel (ST), Viridizide (VI), Wachstumsregulatoren (PG), Pflanzenstärkungsmittel (PS), Mikronährstoffe (MI) und Makronährstoffe (MA). Diese Bezeichnungen und die Anwendungsgebiete sind dem Fachmann bekannt. Wirkstoffe werden allein oder in Kombinationen mit anderen Wirkstoffen eingesetzt. Bevorzugte Pestizide sind HB, FU, IN, PG, MI und besonders HB, FU, IN. Solche Wirkstoffe bzw. Aktivstoffe werden kommerziell meist generell konfektioniert (formuliert) vertrieben, da sie nur in solcher Form vom Anwender handhabbar sind und nach deren Verdünnung mit zumeist Wasser ausgebracht werden können.

Einige Wirkstoffe oder Wirkorganismen sind beispielhaft im 'The Pesticide Manual', 14th edition, 2006, The British Crop Protection Council, oder in 'The Manual of Biocontrol Agents', 2004, The British Crop Protection Council aufgelistet. Von einer Auflistung der Einzelwirkstoffe und von Formulierungen dieser Wirkstoffe, sowie Wirkstoffkombinationen miteinander oder untereinander wird hier abgesehen.

Produkte mit Naturstoffcharakter, oder biologische Produkte sind in einer der oben genannten Schriften auch aufgeführt. Pflanzennährstoffe und Pflanzenmikronährstoffe, die in flüssiger Zubereitung in den unterschiedlichsten Formen allein oder in Kombination mit anderen Nährstoffen oder in Kombination mit Pflanzenschutzmitteln flüssig ausgebracht werden sind beispielhaft Stickstoff, Phosphat, Kalium, Calcium, Magnesium, Mangan, Bor, Kupfer, Eisen, Selen, Kobalt, und weitere, die unter der Bezeichnung Mikronährstoffe bekannt sind.

Es besteht ein Bedarf an biologischen Substanzen, die toxikologisch unbedenklich sind, nicht umweltgefährdend sind nach der EC Directive 1907/2006, die Oberflächenspannung von Wasser stark heruntersetzen, wasserlöslich bzw. dispergierbar sind und als Tankmischungsadditiv sowie als

Formulierungshilfsstoff eingesetzt werden können, um eine selektive Wirksamkeit bei Pestiziden zu fördern. Toxikologisch unbedenklich bedeutet im Rahmen dieser Erfindung, dass die gesuchten biologischen Substanzen zum Beispiel biologisch abbaubar sind, keine negative (also > 10 mg/L) Fisch-, Daphnien und/oder Algentoxizität aufweisen und keine Augenreizung beim Anwender hervorrufen. Bevorzugte Anwendungskonzentrationen im Tankmischungsbereich liegen zwischen 0,001 - 3% Vol.-%, bevorzugt 0,01-0,5 Vol.-% und besonders bevorzugt unter 0,1 Vol.-% (ca. entsprechend auch 0,1 Gew.-%) der Spritzbrühe. Dieses ist gleichbedeutend mit 10-3.000 ml/ha, wenn üblicherweise 100 bis 1.000 l Spritzbrühe pro ha ausgebracht werden und bevorzugt eine Adjuvantmenge von 50-700 ml/ha, die auch von den jeweiligen Spritzbrühmengen unabhängig von der Gesamtwasseraufwandmenge pro ha zugesetzt werden. Als Formulierungshilfsstoff muss diese Konzentration auf das Pflanzenschutzmittelkonzentrat und dessen Aufwandmenge zurückgerechnet werden. Die zuvor genannte Adjuvantmenge entspricht der Anwendungskonzentration auf dem Feld.

Aufgabe der vorliegenden Anmeldung ist es daher toxikologisch unbedenkliche Adjuvantien zu finden, die die Wirkung von Pestiziden ausgewählt aus der Gruppe der Kontaktfungizide, Sulfonylharnstoff-Herbizide oder Triazol-Fungizide verstärken.

Gelöst wird die Aufgabe durch die Verwendung von Adjuvantien/Additiven basierend auf Sophorolipiden.

Der Gegenstand des Hauptanspruchs der vorliegenden Erfindung ist somit die Verwendung von Adjuvantien enthaltend Sophorolipide, als Bestandteil von Tankmischungsadditiven, als Tankmischungsadditiv selbst, oder als

Formulierungsadditiv, jeweils mit der Funktion des Adjuvants für den Pflanzenschutz und/oder den industriellen

non-crop Bereich, wobei die Adjuvantien, enthaltend Sophorolipide die Wirkung von Pestiziden verstärken und/oder die Wirksamkeit erhöhen, mit der Maßgabe, dass der Dosierungsbereich des Adjuvants zwischen 10-3.000 ml/ha liegt, mit der Maßgabe, dass als Pestizide Kontaktfungizide und/oder systemische Herbizide ausgewählt aus der Gruppe der Sulfonylharnstoffe und/oder systemische Fungizide ausgewählt aus der Klasse der Triazole sowie Gemische dieser verwendet werden.

Bevorzugt ist die Verwendung als Emulgator, Dispergiermittel, Entschäumer oder als Netzmittel. Bevorzugt werden Sophorolipidester eingesetzt.

Bevorzugt verstärken die erfindungsgemäßen Adjuvantien, enthaltend Sophorolipide die Wirkung von Pestiziden und/oder erhöhen die Wirksamkeit, bevorzugt um mehr als 10 % gegenüber einer Verwendung ohne die Sophorolipide, mit der Maßgabe, dass der Dosierungsbereich des Adjuvants zwischen 30-1.000 mL/ha und bevorzugt zwischen 50-700 mL/ha liegt.

Bevorzugt werden Pestizide im Sinne von Pflanzenschutzmitteln und industriellen Schädlingsbekämpfungsmitteln, mit der Maßgabe, dass als Pestizide Kontaktfungizide und/oder systemische Herbizide ausgewählt aus der Gruppe der Sulfonylharnstoffe und/oder systemische Fungizide ausgewählt aus der Klasse der Triazole sowie Gemische dieser verwendet werden, insbesondere wenn die Kombination aus Pestizid und Adjuvant protektiv angewendet werden.

Besonders bevorzugt ist dabei die Verwendung der Sophorolipide in Pestizidanwendungen als Tankmischungsadditiv oder Formulierungshilfsstoff. Dabei sollten die Adjuvantien wenig schäumen und damit weniger als 80 mL Schaum nach 30 Sekunden nach der CIPAC-Methode MT 47 entwickeln und/oder keine Augenreizung beim Anwender hervorrufen und/oder die Oberflächenspannung von Wasser auf Werte von kleiner als 40 mN/m, bezogen auf eine 0,1 Gew.-%ige wässrige Lösung des Adjuvants, herabsenken.

Bevorzugt ist eine synergistische Wirkung des Adjuvants zusammen mit dem Pestizid. Die Effektivität der pestiziden Wirksamkeit dieser bevorzugten und erfindungsgemäßen Zusammensetzungen ist dabei höher als die Effektivität des Pestizids oder des Adjuvants alleine oder deren additive Wirkung, wobei in einer bevorzugten Ausführungsform das Adjuvant alleine selbst keine pestizide Wirksamkeit im Anwendungskonzentrationsbereich aufweist. Diese synergistische Wirkung tritt bevorzugt in einem Konzentrationsbereich und einem Mengenverhältnis von Pestizidwirkstoff zu Adjuvant von 1:120 bis 30:1, bevorzugt 1:100 bis 20:1, ganz besonders bevorzugt 1:75 bis 4:1 auf. Dieser Konzentrationsbereich bezieht sich auf die Verwendung als Tankmischungsadditiv sowie als Formulierungsadditiv. Bevorzugt werden als Pestizide Herbizide und/oder Fungizide ausgewählt aus der Gruppe der Kontaktfungizide, Sulfonylharnstoff-Herbizide oder Triazol-Fungizide und deren Gemische verwendet.

In einer bevorzugten Ausführungsform können die Adjuvants/Additive zusammen mit anderen Co-Tensiden, beispielsweise Carbonsäuren eingesetzt werden. Als Carbonsäuren werden bevorzugt Alkansäuren mit gerader, gesättigter Alkylkette von 6 bis 10 Kohlenstoffatomen, oder bevorzugt Octansäure (Caprylsäure), Nonansäure, Decansäure (Caprinsäure), Ölsäure oder deren Mischungen, eingesetzt.

Die Adjuvantien können als Additive in Pestizidformulierungen, wie beispielsweise Suspensionskonzentraten, Kapselsuspensionen, Emulsionskonzen-traten, wasserlöslichen Konzentraten, Öldispersionen, Suspoemulsionen, Emulsionen in Wasser, wasserdispergierbaren Granulaten oder Pulvern, neben anderen Zusatzstoffen, wie beispielsweise Dispergiermitteln, Emulgatoren, Verdickern und Entschäumern, mit einem Adjuvantgehalt von 1 Gew.-% bis 99 Gew.-%, bevorzugt im Bereich von 1,5 Gew.-% bis 60 Gew.-% und besonders bevorzugt von 1,9 bis 30 Gew.-% eingesetzt werden. Weiterer Gegenstand der Erfindung sind Zusammensetzungen die Sophorolipide oder Sophorolipidporäparationen durch fermentative Herstellung und mindestens einen Pestizidwirkstoff enthalten, mit der Maßgabe, dass als Pestizide Kontaktfungizide und/oder systemische Herbizide ausgewählt aus der Gruppe der Sulfonylharnstoffe und/oder systemische Fungizide ausgewählt aus der Klasse der Triazole sowie Gemische dieser verwendet werden, wobei das Sophorolipid selbst keinen eigenen pestizidischen Effekt ausübt.

Ein weiterer Gegenstand der Erfindung sind Zusammensetzungen aus Sophorolipiden und Pestizidwirkstoffen, wobei die pestizidische Effektivität und Wirksamkeit der Zusammensetzung größer ist als die Summe der Effektivitäten der Einzelkomponenten. Dabei ist die Effektivität sowohl bezogen auf die Gesamtmenge als auch bezogen auf die relativen Mengenverhältnisse. Eine optimale Effektivität wird erzielt bei einem Mengenverhältnis von Pestizidwirkstoff zu Adjuvant von 1:100 bis 20:1, bevorzugt 1:75 bis 4:1.

Die erfindungsgegenständlichen Zusammensetzungen enthalten Sophorolipide, die durch fermentative Prozesse hergestellt werden können. Bedingt durch die heterogene Zusammensetzung der Edukte (z.B. Mischungen aus Fettsäuren) und der eingeschränkten Selektivität des mikrobiellen Biosyntheseapparates, liegen die Substanzen nicht als Reinverbindungen, sondern als natürliche Gemische vor. Unter den Sophorolipiden nach den Gegenständen dieser Erfindung werden auch Zusammensetzungen verstanden, die nach fermentativer Herstellung ohne weitere Aufreinigung eingesetzt und verwendet werden können.

Die Sophorolipide nach dieser Definition können somit beispielsweise Edukte des Fermentationsprozesses, wie beispielsweise Fettsäuren und Kohlenhydrate, die als Substrate für die Mikroorganismen gedient haben, als auch beispielsweise Wasser und weitere natürliche, insbesondere organische Verunreinigungen enthalten. Bestimmte Sophorolipidformen sind nicht pH stabil. So kann es beispielsweise basenkatalysiert zu einer Deactylierung oder einer

Lactonöffnung unter Bildung der analogen Säureform kommen.

In einer bevorzugten Ausführungsform der Erfindung werden Sophorolipide als Bestandteil von Adjuvantien/Additiven im Pflanzenschutz und/oder im non-crop Bereich verwendet.

Die Sophorolipide liegen bezogen auf die Trockenmasse, in einer Reinheit von > 30 Gew.-%, bevorzugt > 65 Gew.-% (m/m), besonders bevorzugt > 80 Gew.-% (m/m) vor. Die Adjuvantien können zu 1 bis 100 Gew.-% die Sophorolipide selbst. Der Gehalt der Sophorolipide im Adjuvant ist, bezogen auf die Trockenmasse, bevorzugt größer 30 Gew.-%, und insbesondere größer 60 Gew.-%.

Als hydrophobes Substrat der fermentativen Herstellung können Kohlenwasserstoffe, Fettsäuren, Fettsäureester und/oder Fettalkohole eingesetzt werden, bevorzugt werden Trigylceride wie beispielsweise Talg, Sonnenblumen-, Raps-, Distel-, Soja-, Palm-, Palmkern-, Kokos-, Olivenöl oder deren Mischungen neben dem hydrophilen Substrat verwendet.

Der Sophorolipidanteil im Adjuvant kann aufgereinigt oder ungereinigt, entweder:

i) als Mischung aus Lacton und Säureform vorliegen mit einem Säureanteil von 10 bis 100 Gew.-%, bevorzugt < 60 Gew.-% besonders bevorzugt < 20 Gew.-% oder

ii) zu einem Anteil von > 90 Gew.-% aus der Lactonform besteht, der durch das Einstellen des pH Wertes auf einen Wert zwischen 6 und 8 solubilisiert werden kann, oder

iii) als Methyl- oder Ethylester mit einem Anteil von 1 bis 100 Gew.-%, bevorzugt > 50 Gew.-% und insbesondere > 90 Gew.-% (m/m) des jeweiligen Esters

vorliegen.

Überraschenderweise wurde gefunden, dass die Lactonform der Sophorolipide auch durch noch aus der Fermentation vorhandene oder durch zusätzlich zugesetzte Fettsäuren bei einem pH-Wert von 6-8 solubilisiert werden kann. Besonders überraschend ist, dass hier klare Systeme erhalten wurden, da bei pH 6 weder Lactonform des Sophorolipids noch die Fettsäure alleine klar "löslich" sind. Nur die Kombination aus Lactonform und Fettsäure ist klar "löslich". Klar "löslich" bedeutet hier, dass eine zumindest scheinbare echte Lösung erhalten wird, die allerdings auch als feine Emulsion vorliegen kann. Kennzeichnend ist jedenfalls ,dass sich die gegebenenfalls vorliegende Emulsion nicht wieder in einzelne Phasen aufspaltet.

Ein weiterer Gegenstand der Erfindung ist daher auch ein Verfahren zur Herstellung einer solubilisierten Lactonform der Sophorolipide indem die Lactonform durch die Anwesenheit von Fettsäuren durch Einstellen des pH-Werts auf 6-8 in Lösung gebracht wird, wobei die Fettsäuren ausgewählt sind aus der Gruppe Nonansäure (Pelargonsäure), Decansäure (Caprinsäure), Dodecansäure (Laurinsäure), Tetradecansäure (Myristinsäure), Hexadecansäure (Palmitinsäure), Octadecansäure (Stearinsäure), Octadecaensäure (Ölsäure) oder deren Mischungen, sowie die so hergestellten Lösungen oder Emulsionen. Der pH-Wert kann durch Zugabe von anorganischen Laugen wie beispielsweise Natronlauge oder durch weitere Fettsäurezugabe eingestellt werden, je nachdem ob der pH-Wert erhöht oder aber erniedrigt werden soll. Als Fettsäuren kommen die während der Fermentation nicht vollständig umgesetzten Fettsäuren in Frage und/oder können zusätzlich zugesetzt werden. Die Fettsäuren können den Säurekomponenten der als Substrate eingesetzten Trigylceride, ausgewählt aus der Gruppe Talg, Sonnenblumen-, Raps-, Distel-, Soja-, Palm-, Palmkern-, Kokos-, Olivenöl, oder auch kurzbis mittelkettigen Carbonsäuren mit einer Alkylkettenlänge von 6 bis 22 Kohlenstoffatomen entsprechen.

In einer bevorzugten Ausführungsform weist das sophorolipidhaltige Adjuvant in einer 0,1 Gew.-% wässrigen Lösung eine Oberflächenspannung von < 40 mN/m auf. Das Adjuvant kann neben dem Sophorolipid und gegebenenfalls organischen und organischen Lösungsmitteln, vorzugsweise Wasser, weitere, dem Fachmann bekannte Zusatzstoffe enthalten.

Den Sophorolipiden können auch organische Säuren oder Öle, bevorzugt die oben genannten, zugesetzt werden und die erhaltenen Mischungen dann als Mischungsbestandteilen von Tankmischadditiven verwendet werden.

Ein weiterer Gegenstand der Erfindung ist die Verwendung von Sophorolipiden in Pflanzenschutzmittelformulierungen jeweils mit der Funktion als Emulgator, Dispergiermittel, Entschäumer oder generell als Netzmittel.

In einer besonders bevorzugten Ausführungsform der vorliegenden Erfindung werden Sophorolipidzusammensetzungen verwendet, die Sophorolipide der Formel 1 oder 1a enthalten,

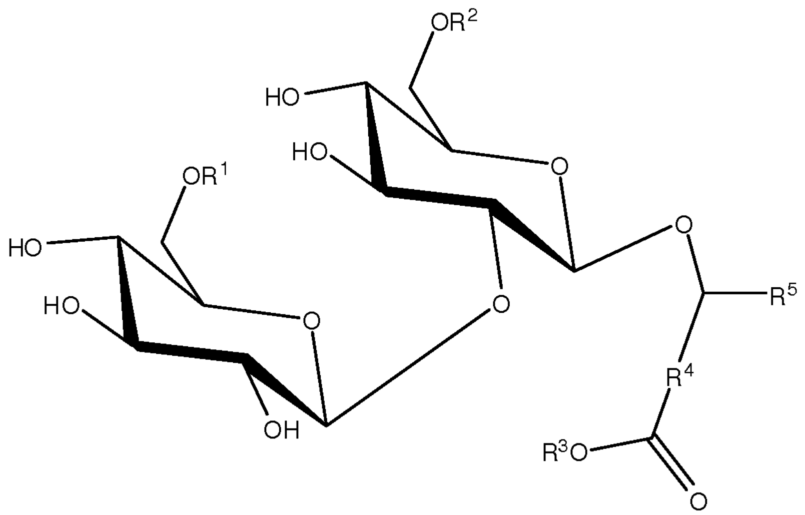

Formel 1

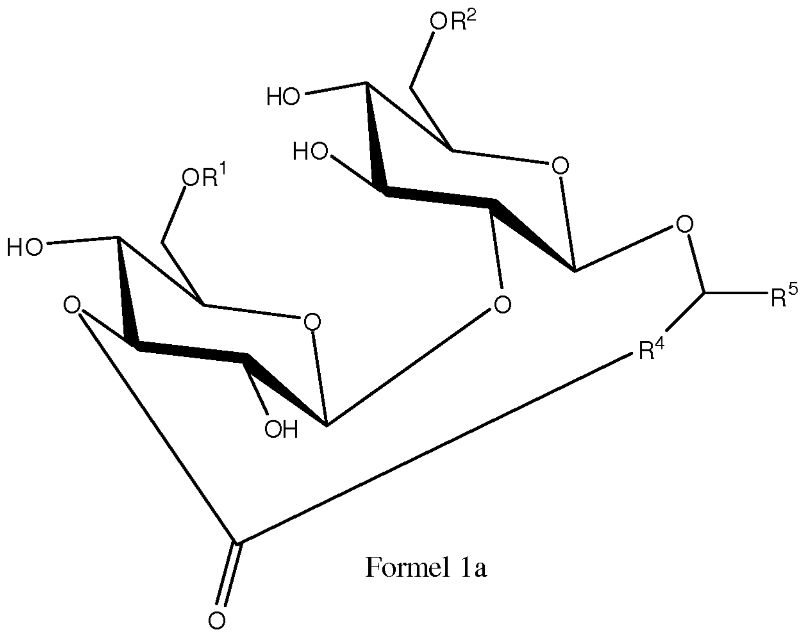

Formel 1a

wobei

$R^1$ und $R^2$ unabhängig voneinander entweder H oder eine Acetylgruppe sind,
$R^3$ H, eine Methyl-, Ethyl- oder Hexylgruppe ist,
$R^4$ unabhängig voneinander eine gesättigte oder ungesättigte zweiwertige/zweibindige, verzweigte oder unverzweigte organische Gruppe, bevorzugt eine Kohlenwasserstoffgruppe mit 1-28 Kohlenstoffatomen, die gegebenenfalls durch Amin-, Ester-, Amid- oder Thioestergruppen unterbrochen sein kann und weiterhin bevorzugt mindestens einfach ungesättigt ist,

$R^5$ H oder eine Methylgruppe ist,
mit der Maßgabe, dass die Gesamtzahl der Kohlenstoffatome in den Gruppen $R^4$ und $R^5$ die Zahl 29 nicht überschreitet und bevorzugt 12 bis 20 und insbesondere 14 bis 16 beträgt.

Die organische Gruppe $R^4$ kann eine Kohlenstoffkette sein, die gegebenenfalls durch Heteroatome wie N, S, O unterbrochen sein kann und somit auch durch Amin-, Ether-, Ester, Amid- oder Thioestergruppen unterbrochen ist.

Weitere Gegenstände der Erfindung werden durch die Ansprüche beschrieben, deren Offenbarungsgehalt vollumfänglich Bestandteil dieser Beschreibung ist.

In den nachfolgend aufgeführten Beispielen wird die vorliegende Erfindung beispielhaft beschrieben.

Sind nachfolgend Bereiche, Zahlenwerte, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Zahlenwerte und Teilgruppen von Verbindungen, die durch Herausnahme von einzelnen Werten (Bereichen) oder Verbindungen erhalten werden können.

Beispiele:

**Untersuchte Materialien:**

Die untersuchten Sophorolipide lassen sich durch folgende allgemeine Formel 1 und /oder 1a beschreiben.
Die Herstellung des Rohproduktes erfolgte mittels Fermentation mit der Hefe *Candida bombicola* auf Basis der Substrate Glucose, Sonnen-, Raps- oder Olivenöl (enthaltend als Fettsäureanteil hauptsächlich Ölsäure).
Das Wachstumsmedium enthielt folgende Bestandteile:

- 10 g/L Glucose ((D)+Glucose*$1H_20$)
- 7,5 g/L YNB (Yeast Nitrogen Base)
- 2 g/L Hefeextrakt

1,1 L des Mediums wurden in einem Fermenter mit 2 L Arbeitsvolumen autoklaviert und mit einer sich in der exponentiellen Phase befindlichen Vorkultur aus dem gleichen Medium angeimpft. Die Temperatur wurde auf 30 °C eingestellt. Der $pO_2$ wurde über die Rührerdrehzahl auf 30 % relativer Sättigung bei Begasung mit Luft gehalten, die Rührerdrehzahl war jedoch nie kleiner als 200 rpm. Während der Biomassebildungsphase fiel der pH Wert auf 3,5 und wurde durch Zugabe von NaOH auf diesem Wert gehalten. Nachdem die Biomassebildungsphase beendet war (Verbrauch der vorhandenen Glukose, gekennzeichnet durch den Anstieg des $pO_2$, bzw. Abfall des $pCO_2$), wurde die Produktbildungsphase durch Zugabe von 150 g des entsprechenden Öls, 200 mL einer 750 g/L Glucoselösung und 10 mL einer 150 g/L Hefeextraktlösung eingeleitet. Das Ende der Produktbildungsphase war durch den erneuten Anstieg des $pO_2$ gekennzeichnet. Nach Beendigung der Fermentation wurde der Ansatz autoklaviert, dabei setzte sich die Rohproduktphase ab. Die Rohproduktphase wurde mit Wasser und anschließend mit Hexan gewaschen. Anschließend wurde die Produktphase mit Ethylacetat extrahiert und dann das Lösungsmittel unter Vakuum entfernt. Hierdurch wurde eine weitgehend wasserfreies Produkt, dass der erfindungsgemäßen Trockenmasse entspricht, erhalten. Die Analytik mittels HPLC-MS und NRM ergab, dass das Produkt zum großen Teil aus der zweifach acetylierten Sophorolipid-Lactonform mit glycosidisch gebundener Fettsäure besteht (Hauptbestandteile: Sophorolipid-Lacton 65-80 Gew.-%, Fettsäure 1-16 Gew.-%, Glycerin 1-3 Gew.-%).

Tabelle 1: Untersuchte Adjuvantien im Überblick

| | |
|---|---|
| SLL | Sophorolipid = Trockenmasse (fest) |
| SLM | Sophorolipid Methylester (fest) |
| SLS | Sophorolipid Säureform (fest) |
| SLL-SLS | Sophorolipid Lactonform in Mischung mit Säureform, 50% in Wasser |
| SLLF | Gemisch aus 30% SLL + 30% H2O + 20 %Nonansäure + 20% Propylenglycol |

Standardadjuvant als Vergleichssubstanz: BREAK-THRU® S 240 (alkoxyliertes Trisiloxan der Evonik Goldschmidt GmbH)
In Tabelle 1 sind diverse Derivate des fermentativ hergestellten Sophorolipids SLL aufgeführt, die später in Gewächshausversuchen getestet wurden.
Der Verlauf der Derivatisierungsschritte wurde über NMR Analytik bestätigt.
SLL: Das SLL entspricht der Trockenmasse des Fermentationsprozesses und bildet einen Feststoff, dessen Sophorolipidgehalt > 80 Gew.-% beträgt und der hauptsächlich in der Lactonform des Sophorolipids vorliegt (> 90 Gew.-%). SLM: Für die Synthese des Methylesters bzw. Ethylesters wurde SLL in Methanol bzw. Ethanol als Lösungsmittel gelöst und durch Zugabe von $NaOCH_3$ bzw. $NaOCH_2CH_3$ (pH = 12) bei einer Temperatur von 60 °C während 3 h umgeestert. Anschließend wurde das Lösungsmittel unter Vakuum entfernt. Es wurde ein leicht zähes Produkt erhalten, dass durch Einfrieren und anschließender Vermahlung zu einem Pulver mit einer Wasserlöslichkeit von > 50 Gew.-% (m/m) verarbeitet werden konnte.
SLS: Zu einer 60 Gew.-% wässrigen Suspension des Sophorolipids SLL wurden 5 Gew.-% fester NaOH Pellets zugegeben. Danach wurde bei einer Temperatur von 50 °C 30 Minuten lang gerührt, um durch Verseifung die deacetylierte

Säureform des Sophorolipids zu erhalten. Anschließend wurde der Ansatz durch Zugabe von HCl auf einen pH Wert von 3 eingestellt und das Produkt mit Ethylacetat extrahiert. Nach Entfernung des Ethylacetats wurde ein zu einem Pulver vermahlbarer Rückstand erhalten, der zu > 50 Gew.-% wasserlöslich ist.

SLL-SLS: Hierbei wurde wie bei SLS vorgegangen, allerdings wurde nur 1/10 der NaOH zugegeben, wodurch es lediglich zur Teilhydrolyse der Lactonform kommt. Diese Mischform wurde mit Wasser zu einer Lösung mit einem Gehalt von etwa 50 Gew.-% angesetzt.

Physikalische Eigenschaften:

a) Schaumverhalten und Oberflächenspannung:

Für die zugrundeliegenden Strukturen wurden das Schaumverhalten (nach CIPAC Methode MT 47) und die statische Oberflächenspannung in 0,1 Gew.-%igen wässrigen Lösungen (auf die Sophorolipidpräperation wie sie als Adjuvant vorliegt) gemessen. Die Oberflächenspannung der 0,1 Gew.-%igen Lösungen wurde mittels eines Blasendrucktensiometers der SITA Messtechnik GmbH, Gerät Sita online t 60; SITA online Version 2,0 gemessen. Die Blasenverweildauer der statischen Oberflächenspannung liegt bei 30 ms. Die Messabweichung liegt bei ca. 0,4 - 1 % der angegeben mN/m-Werte. Die Messungen wurden bei einer Umgebungstemperatur von 22°C durchgeführt. Die aufgezeigten Werte sind Mittelwerte aus 3 Messungen. Laut CIPAC Definition gelten als "nicht schäumend" Produkte, die lediglich einen Schaum von 5 mL im Messkolben bei der angegebenen Methode erzeugen. Als kaum schäumend werden hier nun solche definiert, die Werte von ≤ 80 mL nach 30 sec. aufzeigen.

b) Spreitungsmessungen:

Die Bestimmung der Spreitungseigenschaften erfolgte mit einer Pipette und einer biaxial orientierten Polypropylenfolie (FORCO OPPB AT-OPAL der Firma 4P Folie Forchheim in Deutschland). Ein Tropfen einer wässrigen Lösung enthaltend 0,1 Gew.-% des Adjuvants, mit einem Volumen von 50 Mikrolitern wurde auf die Folie gegeben. Gemessen wurde der Durchmesser des Tropfens nach einer Minute. Falls der Tropfen nicht kreisrund spreitete, wurde der Mittelwert der längsten und der kürzesten Achse berechnet. Die Messungen wurden in einem klimatisierten Labor bei 21,5 °C und 60 % relativer Luftfeuchtigkeit durchgeführt.

Tabelle 2: Physikalische Eigenschaften von erfindungsgemässen Adjuvantien/Additiven gegenüber dem synthetischen Trisiloxan BREAK-THRU® S240

| | BREAK-THRU® S 240* | SLM | SLS | SLL-SLS 50 Gew.-% in Wasser | SLL |
|---|---|---|---|---|---|
| Statische Oberflächen -spannung [mN/m] | 21,1 | 38,6 | 39,5 | 39,8 | 35,2 |
| Schaum in mL (nach 30 sec.) | 220 | 80 | 80 | 70 | 60 |
| Spreitung [mm] | 70 | 8 | 9 | 8 | 10 |
| * = Vergleichssubstanz - Organomodifiziertes Trisiloxan | | | | | |

Bewertung der Ergebnisse aus Tabelle 2:

Überraschenderweise ist gegenüber der Vergleichssubstanz BREAK-THRU® S240 nur eine geringe Spreitung für die erfindungsgemäßen Zusammensetzungen erkennbar. Allerdings ist die Schaumbildung der erfindungsgemäßen Formulierungen deutlich reduziert.

Anwendungstechnische Austestung:

Für die Verwendung von Substanzen als Formulierungsadditiv ist nur die physikalische/chemische Kompatibilität mit anderen Formulierungsstoffen wichtig, die biologische Wirksamkeit einer Substanz als Adjuvant wird jedoch immer zunächst allein, also als Tankmischungsadditiv geprüft. Daher wird als Basis für diese Erfindung die Bestätigung der biologischen Wirksamkeit mittels Tankmischungsversuchen im

Gewächshaus ermittelt. Im Folgenden werden Gewächshausversuche beschrieben, die zur Ermittlung der biologischen Wirkungsverbesserung von Pestiziden mit Zusatz von Adjuvantien im Pflanzenschutz dienen. Aus der

grossen Anzahl von Pestiziden wurden hier beispielhaft die Fungizide Epoxiconazol und Schwefel sowie das Herbizid Rimsulfuron ausgewählt. Um den Synergismus des Adjuvants herauszufinden wurden folgende Versuche gemacht (s. Tabellen 5-7)

a) Adjuvant ohne Pestizidzusatz
b) Pestizidanwendung alleine
c) Pestizid plus Adjuvant.

Um einen Synergismus evaluieren zu können, sollten die
Ergebnisse von c besser sein als die Summe aus a und b, siehe auch "Colby Formel".
In den Versuchen, die in Tabelle 3 und 4 dargestellt sind, wurde lediglich der Einfluss von unterschiedlichen Adjuvantien auf die Effektivität der Pestizide getestet.

Versuchsanordnung für die kurativen Versuche:

In einem Gewächshaus wurde die Gerstensorte "Ingrid" (3 Pflanzen je Topf) in Pflanzenerde "Frustosol" ausgesät. Drei Wochen später wurden die ca. 10-15 cm langen Blätter der Pflanzen mit frischen Konidien des Mehltau-Pilzes *Blumeria graminis f. sp. hordei* (Rasse A6) mittels eines Inokulationsturmes beimpft. Zwei Tage danach wurden sie mit einer Spritzbrühe, welche das Fungizid Opus® (125 g/L Epoxiconazol) der Firma BASF enthielt, besprüht. Dem Fachmann sind solche Versuche als kurative Versuche bekannt. Die Sprühwassermenge entsprach 250 l/ha. Die Dosierung des Fungizids betrug 10 ml/ha. Die Dosierungen der Adjuvantien variierte zwischen 50-125 mL (oder g)/ha. Bei wasserverdünnten Adjuvantien/Additiven (wie dem SLL-SLS) ist die Dosierung auf den Aktivstoffgehalt bezogen. Diese Menge entsprach etwa 0,0025 - 0,5 Gew.-% des Adjuvants/Additives in der Spritzbrühe, welches mit Standardadjuvantien wie beispielsweise dem BREAK-THRU® S240 vergleichbar ist.

In Tabelle 3 sind Vergleichsergebnisse zwischen dem BREAK-THRU® S240 und dem Sophorolipid SLL bei gleichen Konzentrationen gezeigt. Hierbei sieht man, dass die Dosierung zwischen 50-100 mL/ha liegen sollte und eine Konzentration der SLLs von grösser 50 g/ha keine Wirkungssteigerung erzielt. Da die Erfahrungen bezüglich einer optimalen Dosierung des Sophorolipids nicht vorlagen, wurden daher als Grundlage für weitere Tests für die Sophorolipidpräperationen und deren Derivate 75 ml/ha bzw 75 g a.i.(Aktivstoff)/ha als Grundlage genommen (s. Tabelle 5-7). In einigen Fällen wurden die Adjuvantien/Additive auch ohne Fungizid gesprüht, um zu prüfen, ob die Adjuvantien/Additive allein eine biologische Wirkung aufzeigen würden. Nachdem der Sprühfilm getrocknet war, wurden 8 cm lange Blattsegmente von den behandelten und auch von völlig unbehandelten Pflanzen herausgeschnitten und für jede Variante separat 15 Blätter auf Benzimidazol-Agar in Petrischalen gelegt (0,5% Agar zu dem nach Sterilisierung 40 ppm Benzimidazol hinzugefügt wurden). Nach 14 Tagen Inkubationszeit bei Raumtemperatur wurde die Erkrankung der Blätter mit Mehltau untersucht, indem der Anteil an infizierter Blattfläche abgeschätzt wurde. Diese Versuchsanstellung ist dem Fachmann geläufig.

Die Wirksamkeit des Adjuvants allein, des Pestizids allein (also der Fungizide oder Herbizide), und der Pestizid/Adjuvant-Kombination wurde, auf der dem Fachmann bekannten Weise, im Vergleich zu einer unbehandelten, aber mit dem Mehltaupilz beimpftem Kontrollprobe, berechnet und in % Kontrolle der Krankheit ausgedrückt.

Versuchsanordnung für die protektiven Versuche:

Die Pflanzenanzucht (Gerste) im Gewächshaus erfolgte in genau der gleichen Weise wie im kurativen Versuch. Die ca. 3 Wochen alten Pflanzen wurden für die protektiven Versuche jedoch mit Spritzbrühen besprüht, die als fungiziden Wirkstoff Schwefel (Microthiol WG 80% Schwefel der Firma Stähler), entweder allein oder in Kombination mit Adjuvantien/Additiven enthielt. Zudem wurde auch, um auf Synergismus zu testen, das Adjuvant allein in der Spritzbrühe, also ohne Schwefel, aufgebracht. Die Schwefeldosierung betrug 1000 ppm/l, die Adjuvantien wurden in unterschiedlichen Dosierungen angewendet (für Dosierungen siehe Ergebnistabellen). Die Spritzbrühmenge betrug 250 l/ha, so dass die Adjuvantkonzentrationen in der Spritzbrühe maximal 0.1% betrug; die Schwefeldosierung betrug 250 g/ha. Nach dem Antrocknen der Spritzbrühen wurden 8 cm lange Blattsegmente von den behandelten und auch von völlig unbehandelten Pflanzen herausgeschnitten und für jede Variante separat 15 Blätter auf Benzimidazol-Agar in Petrischalen gelegt (0,5% Agar zu dem nach Sterilisierung 40 ppm Benzimidazol hinzugefügt wurden). Am nächsten Tag wurden die Pflanzen mit frischen Konidien des Mehltau-Pilzes *Blumeria graminis f. sp. hordei* (Rasse A6) mittels eines Inokulationsturmes beimpft. Solch eine Versuchsanordnung ist dem Fachmann als protektiver Versuch bekannt, weil die Pflanzen vor der Inokulation mit den Pilzen durch Fungizid geschützt wurden. Nach 10 Tagen Inkubationszeit bei Raumtemperatur wurde die Erkrankung der Blätter mit Mehltau untersucht, indem der Anteil an infizierter Blattfläche abgeschätzt wurde. Diese Versuchsanstellung ist dem Fachmann geläufig.

Die Wirksamkeit des Adjuvants allein, des Pestizids allein (also der Fungizide oder Herbizide), und der Pestizid/Adjuvant-Kombination wurde, auf der dem Fachmann bekannten Weise, im Vergleich zu einer unbehandelten, aber mit dem Mehltaupilz beimpftem Kontrollprobe, berechnet und in % Kontrolle der Krankheit ausgedrückt.

Versuche zur Ermittlung der biologischen Wirkungsverbesserung eines Herbizids:

Im Gewächshaus wurde Wiesenrispengras (*Poa pratense*) in Töpfen angezogen. Sobald die Pflanzen eine Höhe von ca. 5-7 cm erreicht hatten, wurden sie mit Spritzbrühe, welche das Herbizid Cato® (DuPont, mit 500 g/kg Rimsulfuron) enthielt, besprüht. Die Sprühwassermenge entsprach 200 l/ha. Dieses wurde ebenso in anderen Varianten durchgeführt, in denen die Spritzbrühe neben Cato® auch verschiedene Adjuvantien enthielt. Zur Reproduzierbarkeit wurden pro Versuchsglied 3 Töpfe gleich behandelt. Die Dosierung des Pestizids betrug 10 g/ha. Als kommerzielles Standardadjuvant wurde das Trisiloxan BREAK-THRU® S240 der Evonik Goldschmidt GmbH mit 50 und 100 ml/ha dem Tank zugesetzt. Die Dosierung der Sophorolipide betrug zwischen 50-250 mL oder g/ha, das heisst, dass die Anwendungskonzentration in der Spritzbrühe von 0.025 bis 0.1 Gew.-% variierte. Dieses war beabsichtigt, um die optimale Anwendungskonzentration herauszufinden. In Tabelle 3 sind Vergleichsergebnisse zwischen dem BREAK-THRU® S240 und dem Sophorolipid SLL bei gleichen Konzentrationen gezeigt. Hierbei sieht man, dass die Dosierung zwischen 50-100 mL/ha liegen sollte und eine Konzentration der SLLs von größer 50 g/ha keine Wirkungssteigerung erzielt. Da die Erfahrungen bezüglich einer optimalen Dosierung des Sophorolipids nicht vorlagen, wurden als Grundlage für weitere Tests mit den Sophorolipidpräperationen und deren Derivate 75 ml/ha bzw. 75 g a.i.(Aktivstoff)/ha verwendet (s. Tabelle 5-7). Da die Dosis immer auf den Aktivgehalt berechnet wird, werden bei SLL-SLS meist 150 mL/ha verwendet, was 75 mL bzw. g/ha des SLLs entspricht. Somit sind die diversen Sophorolipidpräperation-Adjuvantien untereinander vergleichbar. Diese Aktivstoffkonzentration ist beim SLLF erst bei einem Einsatz von 250 ml/ha des Adjuvants erreicht. Die Wirkung der Behandlungen wurde 14, 20 oder 30 Tage nach der Applikation mit den dem Fachmann bekannten Methoden bonitiert. Hierbei wird die Schädigung der Pflanzen durch die Herbizidbehandlung mit unbehandelten Pflanzen verglichen und die Wirksamkeit der Sprühbehandlung wird zu den unbehandelten Pflanzen ins Verhältnis gesetzt. Die Wirksamkeit wurde von jedem der 3 Töpfe pro Versuchsglied bestimmt. Der Mittelwert wurde berechnet und als Prozent Wirkung in den Resultattabellen angegeben.

Tabelle 3: Vergleich der Wirkungssteigerung von unterschiedlichen Adjuvantien auf Fungizide (14 Tage nach Applikation)

| Fungizid mit 10 ml/ha | Adjuvant Code | Adjuvant Dosis / ha | Wirkung (%) |
|---|---|---|---|
| Opus® | ohne * | 0 | 46% |
| Opus® | BREAK-* Thru® S240* | 50 mL/ha | 91% |
| Opus® | BREAK-Thru® S240 | 100 mL/ha | 96% |
| Opus® | SLL | 50 g/ha | 99% |
| Opus® | SLL | 100 g/ha | 98% |
| * Vergleichsversuch | | | |

Tabelle 4: Vergleich der Wirkungssteigerung von unterschiedlichen Adjuvantien auf Herbizide (30 Tage nach Applikation)

| Herbizid 10 g/ha | Netzmittel Code | Netzmittel Dosis / ha | Wirkung (%) |
|---|---|---|---|
| Cato® | ohne * | ohne | 53% |
| Cato® | BREAK- * THRU® S240 | 50 mL/ha | 70% |
| Cato® | BREAK- * THRU® S240 | 100 mL/ha | 80% |
| Cato® | SLL | 100 g/ha | 60% |
| Cato® | SLL | 200 g/ha | 73% |
| * Vergleichsversuch | | | |

In den Tabellen 5-7 wird für das SLLF eine Dosierung gewählt, die es ermöglicht zum Einen die Adjuvantmenge im Verhältnis zu anderen Sophorolipiden (SLM oder SLS) zu vergleichen - hierunter ist die Konzentration von 125 ml/ha

zu verstehen - und zum Anderen aber auch eine erhöhte Adjuvantkonzentration, bei der dann jedoch die Aktivstoffmenge an Sophorolipid von 75 g/ha a.i. vergleichbar ist. Das bedeutet, dass 250 ml/ha an SLLF mit 75 g/ha an SLM verglichen werden können, bzw. 150 ml/ha des SLL-SLS, das in diesem Falle ebenfalls 75 g/ha a.i. enthält.

Tabelle 5: Vergleich von unterschiedlichen Adjuvantderivaten und Mischungen in kurativen Fungizidversuchen (14 Tage nach Applikation)

| Fungizid | Adjuvant Code | Adjuvant Dosis / ha | Wirkung (%) |
|---|---|---|---|
| - | BREAK-THRU® § S240 | 50 mL/ha | 2% |
| - | SLL-SLS | 150 mL/ha (=75 g/ha a.i. des SLL) | 5% |
| - | SLLF | 250 mL/ha (=75 g/ha a.i. des SLL) | 6% |
| 10 mL/ha Opus® | Ohne § | - | 38% |
| 10 mL/ha Opus® | BREAK- § THRU® S240 | 50 mL/ha | 69% |
| 10 mL/ha Opus® | SLM | 75 g/ha | 77% |
| 10 mL/ha Opus® | SLM | 125 g/ha | 67% |
| 10 mL/ha Opus® | SLS | 75 g/ha | 50% |
| 10 mL/ha Opus® | SLS | 125 mL/ha | 63% |
| Opus® | SLL-SLS | 150 mL/ha (= 75 g/ha a.i. des SLL) | 44% |
| 10 mL/ha Opus® | SLLF | 67,5 mL/ha (= 18,7 g/ha a.i. des SLL) | 45% |
| 10 mL/ha Opus® | SLLF | 125 mL /ha (= 37,5 g/ha a.i. des SLL) | 58% |
| 10 mL/ha Opus® | SLLF | 250 mL / ha (= 75 g/ha a.i. des SLL) | 93% |
| * a.i. = active ingredient = Aktivgehalt an Wirksubstanz<br>§ Vergleichsversuch | | | |

Aus Tabelle 5 ist ersichtlich, dass eine Dosissteigerung des SLM keine erhöhte Wirksamkeit mit sich trägt. Dieses wurde schon in Tabelle 3 aufgezeigt. Damit kann man durchaus die Dosierung des BREAK-THRU® S240 (die bei diesem kommerziellen Produkt durch das zugelassene Dosierungslabel vorgegeben ist) von 50 ml/ha und die der Sophorolipide von 75 g/ha a.i. als vergleichbar ansehen.

Tabelle 6 : Vergleich von verschiedenen Adjuvantprodukten und Mischungen in protektiven Fungizidversuchen (10 Tage nach der Applikation)

| Fungizid | Adjuvant Code | Adjuvant Dosis / ha | Wirkung (%) |
|---|---|---|---|
| Ohne | BREAK-* THRU® S240 | 50 mL/ha | 8% |
| Ohne | SLL-SLS | 150 mL/ha (=75 g/ha a.i. des SLL) | 9% |
| Ohne | SLLF | 250 mL/ha (=75 g/ha a.i. des SLL) | 7% |
| Schwefel 250 g/ha | ohne * | - | 46% |
| Schwefel 250 g/ha | BREAK- * THRU® S240 | 50 mL/ha | 68% |
| Schwefel 250 g/ha | SLM | 75 g/ha | 99% |
| Schwefel 250 g/ha | SLM | 125 g/ha | 90% |

(fortgesetzt)

| Fungizid | Adjuvant Code | Adjuvant Dosis / ha | Wirkung (%) |
|---|---|---|---|
| Schwefel 250 g/ha | SLS | 75 g/ha | 77% |
| Schwefel 250 g/ha | SLS | 125 mL/ha | 77% |
| Schwefel 250 g/ha | SLL-SLS | 150 mL/ha (= 75 g/ha a.i. des SLL) | 85% |
| Schwefel 250 g/ha | SLL-SLS | 250 mL/ha (= 125 g/ha a.i. des SLL) | 65% |
| Schwefel 250 g/ha | SLLF | 67,5 mL/ha (=18,7 g/ha a.i. des SLL) | 64% |
| Schwefel 250 g/ha | SLLF | 125 mL /ha (=37,5 g/ha a.i. des SLL) | 75% |
| Schwefel 250 g/ha | SLLF | 250 mL/ha (=75 g/ha a.i. des SLL) | 91% |
| * Vergleichsversuch | | | |

Tabelle 7: Wirkungssteigerung von verschiedenen Adjuvantprodukten auf Herbizide(20 Tage nach der Applikation)

| Herbizid | Adjuvant Code | Adjuvant Dosis / ha | Wirkung (%) |
|---|---|---|---|
| ohne | BREAK * Thru®S240 | 50 mL/ha | 0% |
| ohne | SLL-SLS | 150 mL/ha (= 75 g/ha a.i. des SLL) | 0% |
| Ohne | SLLF | 250 mL/ha (=75 g/ha a.i. des SLL) | 0% |
| Cato® 10 g/ha | Ohne * | | 73% |
| Cato® 10 g/ha | S240 * | 50 mL/ha | 91% |
| Cato® 10 g/ha | SLL-SLS | 150 mL/ha (= 75 g/ha a.i. des SLL) | 86% |
| Cato® 10 g/ha | SLLF | 250 mL/ha (=75 g/ha a.i. des SLL) | 88% |
| * Vergleichsversuch | | | |

Schlussfolgerungen:

Die geprüften Adjuvantien/Additive, speziell Sophorolipide allein oder in Kombination mit Nonansäure als Cotensid, verbessern bei selektiven Dosierungen die Wirksamkeit von Pestiziden, speziell Fungiziden und Herbiziden signifikant, speziell wenn man ihre Applikation allein und der mit Zusatz von Pestizid vergleicht (Synergismus). Werden die Adjuvantien/Additive allein geprüft- also quasi als Biopestizid, wie in US 2005/0266036 beansprucht- (Tabellen 5-7), dann haben sie bei den untersuchten selektiven Dosierungen keine Wirkung für die Kontrolle von Pilzkrankheiten, oder zur Bekämpfung bzw. Wachstumsregulierung von Pflanzen (s. Tabelle 5: SLL-SLS oder SLLF alleine zeigten nur irrelevante 5% bzw. 6% Wirkung, die auf Grund vom Schwankungen in der Versuchsdurchführung entstehen können). Hieraus kann geschlossen werden, dass die Sophorolipide, so sie nicht in Kombination mit Pestiziden verwendet werden, keine pestizidische Wirkung zeigen. Aufgrund der aufgelisteten Ergebnisse kann von synergistischen Wirkungen zwischen Sophorolipiden und Pestiziden gesprochen werden, wobei Synergismus immer dann vorliegt, wenn die gefundene Wirkung der Mischung die der Summe der Einzelwirkungen übertrifft. Dieses ist bei den der Erfindung zugrunde liegenden Substanzen der Fall. So z.B. siehe Tabelle 6. Das Sophorolipid SLL-SLS alleine erbrachte eine Wirksamkeit von 9%, das Pestizid alleine eine von 46%, hingegen betrug die Wirksamkeit der Kombination aufgrund des Synergismus 85%. Synergismus wird üblicherweise nach der Formel von COLBY berechnet, siehe Colby S.R. 1967. Calculating

synergistic and antagonistic responses of herbicide combinations, Weeds 15:20-22. Die Colby Formel beschreibt die zu erwartende Wirkung: Erwartete Wirkung (%) = x + y, oder, wenn die Summe der Wirkungsprozente > 100% ist, nach der Formel:

$$\text{Erwartete Wirkung (\%)} = X + Y - \frac{X \cdot Y}{100}$$

wobei X die Wirkung (%) des Pestizids alleine ist und Y die Wirkung (%) des Adjuvants alleine.
Die Sophorolipide verursachten Wirkungssteigerungen von Pestiziden, insbesondere Fungiziden, die zu kommerziellen Standards (wie dem BREAK-THRU® S240) vergleichbar sind, oder dem kommerziellen Standard, oft selbst bei gleicher Dosierung überlegen sein können (Tab. 3). Dieses ist überraschend, da die Sophorolipide nicht wie BREAK-THRU® S240, eine superspreitende Wirkung zeigen oder die Oberflächenspannung stark reduzieren.
Die Aufwandmenge der Sophorolipide bzw. ihrer Derivate liegt bei 10 - 3000 mL oder Gramm pro Hektar, bevorzugt 50-700 mL oder g /ha. Das entspricht den Anwendungsmengen von handelsüblichen, kommerziell in der Landwirtschaft erhältlichen Adjuvantien.

Alle Derivate von Sophorolipiden sind wirksam, einige jedoch mehr als andere. So sind Methylester von Sophorolipiden (SLM) wirksamer als NaOH hydrolisierte Sophorolipide (SLS), sowohl mit Kontaktpestiziden (Schwefel) wie auch mit systemisch wirksamen Pestiziden (Epoxiconazole).
Die Wirksamkeit von Sophorolipiden kann in bestimmten Fällen, bei denen in binären Systemen die Wirkung des Pestizids nur unzureichend verbessert werden kann, durch Co-tenside wie beispielsweise Nonansäure überproportional gesteigert werden. So entfaltet das Sophorolipid (SLL-SLS) bei 75 g a.i./ha Wirkstoffgehalt eine geringe Wirksamkeitssteigerung zusammen mit dem systemischem Fungizid Opus® (Tabelle 5) erreicht (44% Fungizid plus Adjuvant gegenüber 38% Fungizid allein), zusammen mit Nonansäure (SLLF) jedoch bei gleichem Aktivgehalt an Sophorolipid, also bei einer Dosierung von 250 mL/ha eine Steigerung der Wirkung auf 93% bewirkt. In einem Herbizidversuch (Tabelle 7) zeigte die Kombination Herbizid und Sophorolipid/Nonansäure vergleichbare Werte zum Sophorolipid allein.
Da diese Sophorolipide und ihre Derivate keine eigene fungizide oder herbizide Wirkung bei den aufgewendeten Dosierungen besitzen, kann man von Synergien zwischen biologischen Tensiden für die Wirkungssteigerung von Pestiziden sprechen und die Sophorolipide selbst als Adjuvant laut Definition der PSD bezeichnen.

## Patentansprüche

1. Verwendung von Adjuvantien enthaltend Sophorolipide, als Bestandteil von Tankmischungsadditiven, als Tankmischungsadditiv selbst, oder als Formulierungsadditiv, jeweils mit der Funktion des Adjuvants für den Pflanzenschutz und/oder den industriellen non-crop Bereich, wobei die Adjuvantien enthaltend Sophorolipide die Wirkung von Pestiziden verstärken und/oder die Wirksamkeit erhöhen, mit der Maßgabe, dass der Dosierungsbereich des Adjuvants zwischen 10-3.000 ml/ha liegt
mit der Maßgabe, dass als Pestizide Kontaktfungizide, und/oder systemische Herbizide ausgewählt aus der Gruppe der Sulfonylharnstoffe und/oder systemische Fungizide ausgewählt aus der Klasse der Triazole, sowie Gemische dieser verwendet werden.

2. Verwendung nach Anspruch 1, **dadurch gekennzeichnet, dass** Sophorolipidester verwendet werden.

3. Verwendung nach zumindest einem der Ansprüche 1 oder 2, **dadurch gekennzeichnet, dass** das Adjuvant und das Pestizid synergistisch zusammen wirken.

4. Verwendung nach Anspruch 3, **dadurch gekennzeichnet, dass** die Kombination aus Adjuvant und Pestizid synergistisch in einem Mengenverhältnis von Pestizidwirkstoff zu Adjuvant von 1:120 bis 30:1 wirkt.

5. Verwendung nach zumindest einem der Ansprüche 1 bis 4, **dadurch gekennzeichnet, dass** die Adjuvantien als Additive in Pestizidformulierungen wie Suspensionskonzentraten, Kapselsuspensionen, Emulsionskonzentraten, wasserlöslichen Konzentraten, Öldispersionen, Suspoemulsionen, Emulsionen in Wasser, wasserdispergierbaren Granulaten oder Pulvern, neben anderen Zusatzstoffen in Mengen von 1 Gew.-% bis 99 Gew.-% eingesetzt werden.

6. Verwendung nach Anspruch 5, **dadurch gekennzeichnet, dass** die Adjuvantien in Mengen von 1,5 Gew.-% bis 60 Gew.-% eingesetzt werden.

**7.** Verwendung von Sophorolipiden nach Anspruch 1 in Pflanzenschutzmittelformulierungen, als Emulgator, Dispergiermittel, Entschäumer oder als Netzmittel.

**8.** Zusammensetzungen enthaltend

a) Sophorolipide und/oder Sophorolipidpräparationen erhältlich durch fermentative Herstellung und mindestens einen
b) Pestizidwirkstoff
mit der Maßgabe, dass die Komponente (a) keine eigene pestizidische Wirksamkeit aufweist
und mit der Maßgabe, dass als Pestizide Kontaktfungizide, und/oder systemische Herbizide ausgewählt aus der Gruppe der Sulfonylharnstoffe und/oder systemische Fungizide ausgewählt aus der Klasse der Triazole verwendet werden.

**9.** Zusammensetzung nach Anspruch 8, **dadurch gekennzeichnet, dass** die Sophorolipide, oder die Sophorolipidpräparationen im Adjuvant bezogen auf die Trockenmasse, mit einem Anteil von > 30 Gew.-% im Adjuvant vorliegen.

**10.** Zusammensetzung nach Anspruch 8, **dadurch gekennzeichnet, dass** als hydrophobes Substrat der fermentativen Herstellung Kohlenwasserstoffe, Fettsäuren, Fettsäureester, und/oder Fettalkohole oder deren Mischungen eingesetzt werden.

**11.** Zusammensetzung nach zumindest einem der Ansprüche 8 bis 10, **dadurch gekennzeichnet, dass** der Sophorolipidanteil im Adjuvant aufgereinigt oder ungereinigt

i) als Mischung aus Lacton und Säureform vorliegt mit einem Säureanteil von 10 bis -100 Gew.-% oder
ii) zu einem Anteil von > 90 Gew.-% aus der Lactonform besteht, der durch das Einstellen des pH-Wertes auf einen Wert zwischen 6 und 8 solubilisiert werden kann, oder
iii)als Methyl- oder Ethylester mit einem Anteil von 1 bis 100 Gew.-% des jeweiligen Esters
vorliegt.

**12.** Zusammensetzung nach zumindest einem der Ansprüche 8 bis 11, **dadurch gekennzeichnet, dass** als Sophorolipide solche der Formel 1 oder 1a verwendet werden,

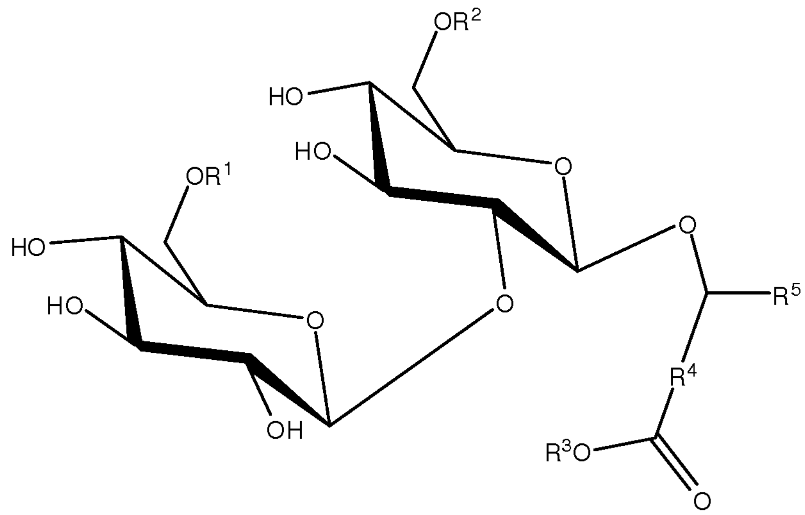

Formel 1

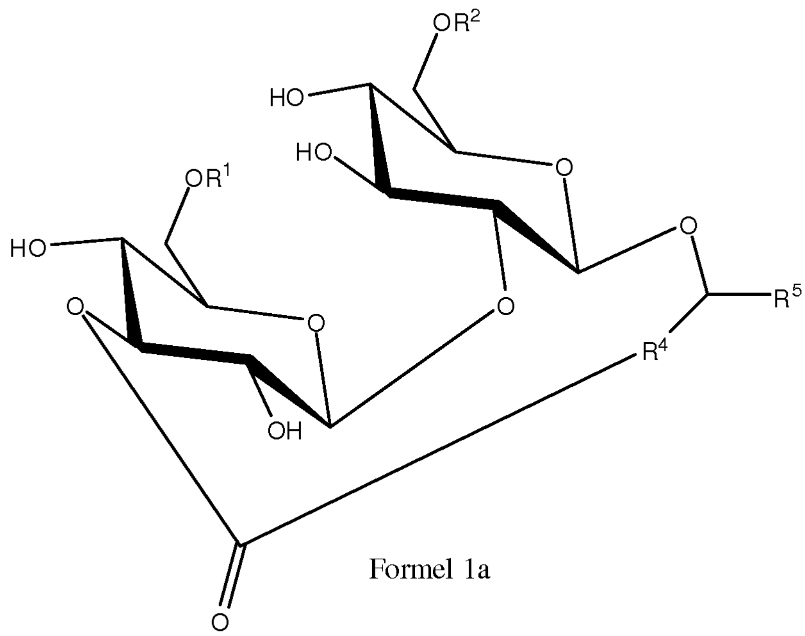

Formel 1a

wobei

$R^1$ und $R^2$ unabhängig voneinander entweder H oder eine Acetylgruppe sind,
$R^3$ H, eine Methyl-, Ethyl- oder Hexylgruppe ist,
$R^4$ unabhängig voneinander eine gesättigte oder ungesättigte zweiwertige/zweibindige, verzweigte oder unverzweigte organische Gruppe ist,
$R^5$ H oder eine Methylgruppe ist, mit der Maßgabe, dass die Gesamtzahl der Kohlenstoffatome in den Gruppen $R^4$ und $R^5$ die Zahl 29 nicht überschreitet.

**13.** Verfahren zur Herstellung einer solubilisierten Lactonform der Sophorolipide, **dadurch gekennzeichnet, dass** die Lactonform durch anwesende Fettsäuren in Lösung gebracht wird indem der pH-Wert auf 6-8 eingestellt wird, mit der Maßgabe, dass die Fettsäuren ausgewählt sind aus der Gruppe Nonansäure (Pelargonsäure), Decansäure (Caprinsäure), Dodecansäure (Laurinsäure), Tetradecansäure (Myristinsäure), Hexadecansäure (Palmitinsäure), Octadecansäure (Stearinsäure), Octadecaensäure (Ölsäure) oder deren Mischungen.

**14.** Zusammensetzung enthaltend die solubilisierte Lactonform eines Sophorolipids, hergestellt nach dem Verfahren des Anspruchs 13.

## Claims

**1.** Use of adjuvants comprising sophorolipids, as a constituent of tank mix additives, as a tank mix additive themselves, or as a formulation additive, in each case with the function of the adjuvant, for crop protection and/or for the industrial non-crop sector, wherein the adjuvants comprising sophorolipids boost the efficacy of pesticides and/or enhance the activity, with the proviso that the dose range of the adjuvant lies between 10-3000 ml/ha, with the proviso that as pesticides use is made of contact fungicides, and/or systemic herbicides selected from the group of the sulfonylureas and/or systemic fungicides selected from the class of the triazoles, and also mixtures of these.

**2.** Use according to Claim 1, **characterized in that** use is made of sophorolipid esters.

**3.** Use according to at least one of Claims 1 and 2, **characterized in that** the adjuvant and the pesticide act synergistically together.

**4.** Use according to Claim 3, **characterized in that** the combination of adjuvant and pesticide acts synergistically in a ratio of active pesticidal ingredient to adjuvant of 1:120 to 30:1.

**5.** Use according to at least one of Claims 1 to 4, **characterized in that** the adjuvants are used as additives in pesticide formulations such as suspension concentrates, capsule suspensions, emulsifiable concentrates, watersoluble concentrates, oil dispersions, suspoemulsions, emulsions in water, water-dispersible granules or powders, in addition to other added substances, in amounts of 1% by weight to 99% by weight.

**6.** Use according to Claim 5, **characterized in that** the adjuvants are used in amounts of 1.5% by weight to 60% by weight.

**7.** Use of sophorolipids according to Claim 1 in crop protection product formulations, as emulsifier, dispersant, defoamer or as wetting agent.

**8.** Compositions comprising

a) sophorolipids and/or sophorolipid preparations obtainable by fermentative preparation, and at least one
b) active pesticidal ingredient
with the proviso that component (a) has no inherent pesticidal activity, and with the proviso that as pesticides use is made of contact fungicides, and/or systemic herbicides selected from the group of the sulfonylureas and/or systemic fungicides selected from the class of the triazoles.

**9.** Composition according to Claim 8, **characterized in that** the sophorolipids, or the sophorolipid preparations are present in the adjuvant, based on the solids, with a fraction of > 30% by weight in the adjuvant.

**10.** Composition according to Claim 8, **characterized in that** as hydrophobic substrate of the fermentative preparation use is made of hydrocarbons, fatty acids, fatty acid esters, and/or fatty alcohols or mixtures thereof.

**11.** Composition according to at least one of Claims 8 to 10, **characterized in that** the sophorolipid fraction in the adjuvant in purified or unpurified form

i) is present as a mixture of lactone and acid form, with an acid fraction of 10% to -100% by weight, or
ii) consists to a fraction of > 90% by weight of the lactone form, which can be solubilized by adjustment of the pH to a level of between 6 and 8, or
iii) is present as methyl or ethyl ester, with a fraction of 1% to 100% by weight of the respective ester.

**12.** Composition according to at least one of Claims 8 to 11, **characterized in that** as sophorolipids use is made of those of the formula 1 or 1a,

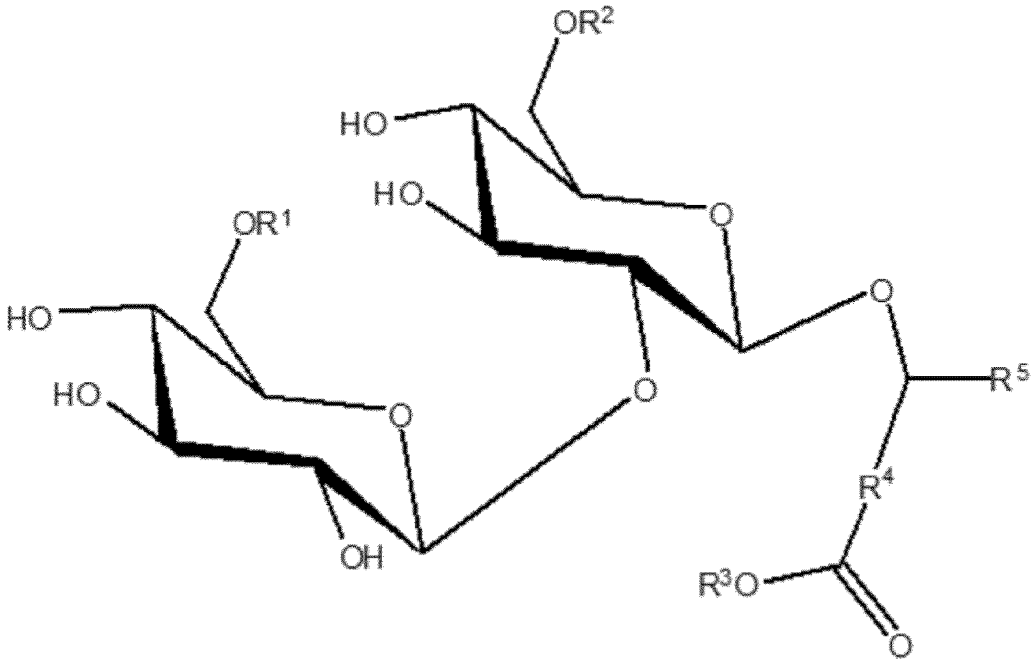

formula 1

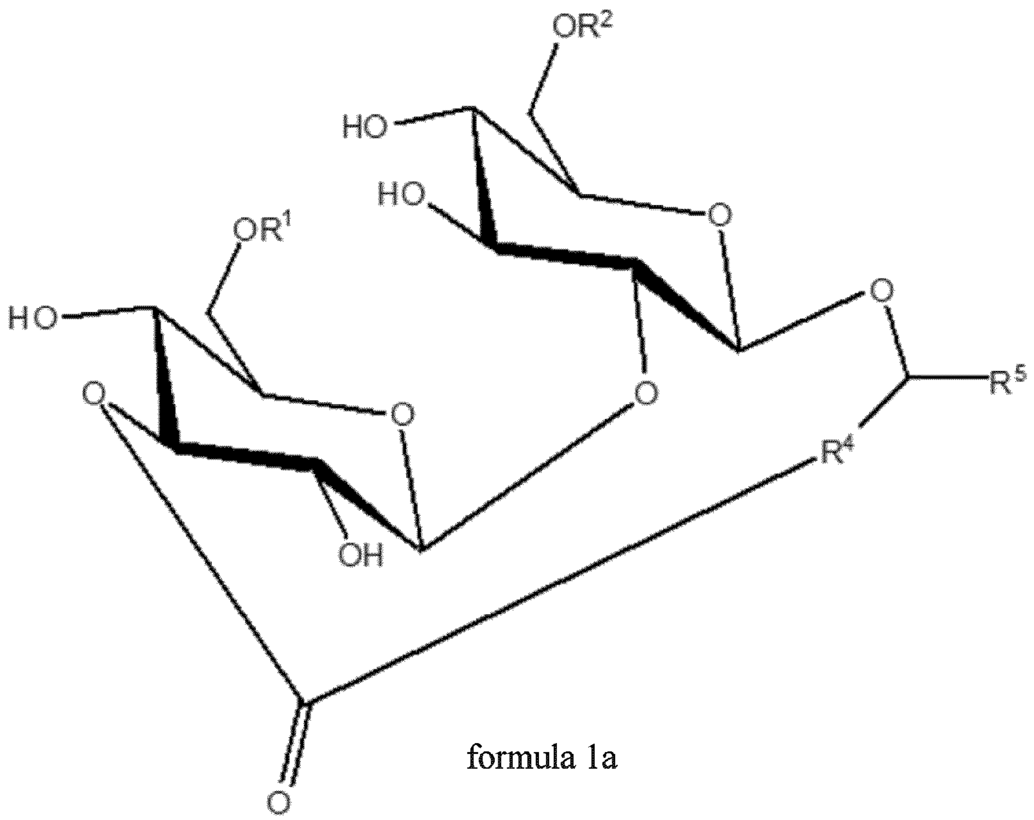

formula 1a

where

$R^1$ and $R^2$ independently of one another are either H or an acetyl group,
$R^3$ is H or a methyl, ethyl or hexyl group,

$R^4$ independently at each occurrence is a saturated or unsaturated divalent, branched or unbranched organic group,
$R^5$ is H or a methyl group,
with the proviso that the total number of the carbon atoms in groups $R^4$ and $R^5$ does not exceed the number 29.

**13.** Process for preparing a solubilized lactone form of the sophorolipids, **characterized in that** the lactone form is brought into solution by fatty acids present, by adjustment of the pH to 6-8, with the proviso that the fatty acids are selected from the group of nonanoic acid (pelargonic acid), decanoic acid (capric acid), dodecanoic acid (lauric acid), tetradecanoic acid (mystiric acid), hexadecanoic acid (palmitic acid), octadecanoic acid (stearic acid), octadecenoic acid (oleic acid) or mixtures thereof.

**14.** Composition comprising the solubilized lactone form of a sophorolipid, prepared by the process of Claim 13.

## Revendications

**1.** Utilisation d'adjuvants contenant des sophorolipides, en tant que composant d'additifs pour mélange en cuve, en tant qu'additif pour mélange en cuve lui-même, ou en tant qu'additif de formulation, ayant chacun la fonction de l'adjuvant pour la protection des plantes et/ou le secteur non agricole, les adjuvants qui contiennent des sophorolipides renforçant l'action de pesticides et/ou augmentant l'efficacité, étant entendu que la plage de dosage de l'adjuvant est comprise entre 10 et 3 000 ml/ha étant entendu qu'on utilise comme pesticides des fongicides de contact, et/ou des herbicides systémiques choisis dans le groupe des sulfonylurées et/ou des fongicides systémiques choisis dans la classe des triazoles, ainsi que des mélanges de ceux-ci.

**2.** Utilisation selon la revendication 1, **caractérisée en ce qu'**on utilise des esters de sophorolipides.

**3.** Utilisation selon au moins l'une quelconque des revendications 1 et 2, **caractérisée en ce que** l'adjuvant et le pesticide agissent ensemble de façon synergique.

**4.** Utilisation selon la revendication 3, caractérisée en ce l'association d'adjuvant et de pesticide agit de façon synergique en un rapport de quantités de substance active pesticide à adjuvant de 1:120 à 30:1.

**5.** Utilisation selon au moins l'une quelconque des revendications 1 à 4, **caractérisée en ce qu'**on utilise les adjuvants en des quantités de 1 % en poids à 99 % en poids comme additifs dans des formulations de pesticides telles que des concentrés de suspensions, des suspensions de capsules, des concentrés d'émulsions, des concentrés hydrosolubles, des dispersions huileuses, des suspoémulsions, des émulsions dans l'eau, des granulés dispersables dans l'eau ou des poudres, en plus d'autres additifs.

**6.** Utilisation selon la revendication 5, **caractérisée en ce qu'**on utilise les adjuvants en des quantités de 1,5 % en poids à 60 % en poids.

**7.** Utilisation de sophorolipides selon la revendication 1 dans des formulations de produits phytosanitaires, comme émulsifiant, dispersant, antimousse ou comme agent mouillant.

**8.** Compositions contenant

a) des sophorolipides et/ou préparations de sophorolipides, pouvant être obtenus par production par fermentation, et au moins une
b) substance active pesticide
étant entendu que le composant (a) ne présente pas d'activité pesticide propre
et étant entendu qu'on utilise comme pesticides des fongicides de contact, et/ou des herbicides systémiques choisis dans le groupe des sulfonylurées et/ou des fongicides systémiques choisis dans la classe des triazoles.

**9.** Composition selon la revendication 8, **caractérisée en ce que** dans l'adjuvant les sophorolipides ou les préparations de sophorolipides sont présents dans l'adjuvant, par rapport à la matière sèche, en une proportion de > 30 % en poids.

**10.** Composition selon la revendication 8, **caractérisée en ce qu'**on utilise comme substrat hydrophobe de la production par fermentation des hydrocarbures, des acides gras, des esters d'acides gras, et/ou des alcools gras ou des

mélanges de ceux-ci.

**11.** Composition selon au moins l'une quelconque des revendications 8 à 10, **caractérisée en ce que** la fraction sophorolipide dans l'adjuvant, purifiée ou non purifiée

i) se trouve sous forme de mélange de forme lactone et de forme acide ayant une teneur en acide de 10 à moins de 100 % en poids ou
ii) consiste en une proportion de > 90 % en poids en la forme lactone, qui peut être solubilisée par l'ajustement du pH à une valeur comprise entre 6 et 8, ou
iii) se trouve sous forme d'ester méthylique ou éthylique en une proportion de I à 100 % en poids de l'ester respectif.

**12.** Composition selon au moins l'une quelconque des revendications 8 à 11, **caractérisée en ce qu'**on utilise comme sophorolipides ceux de formule 1 ou 1a,

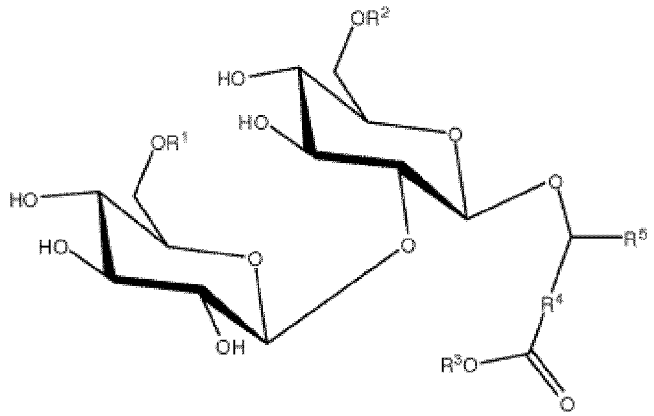

Formule 1

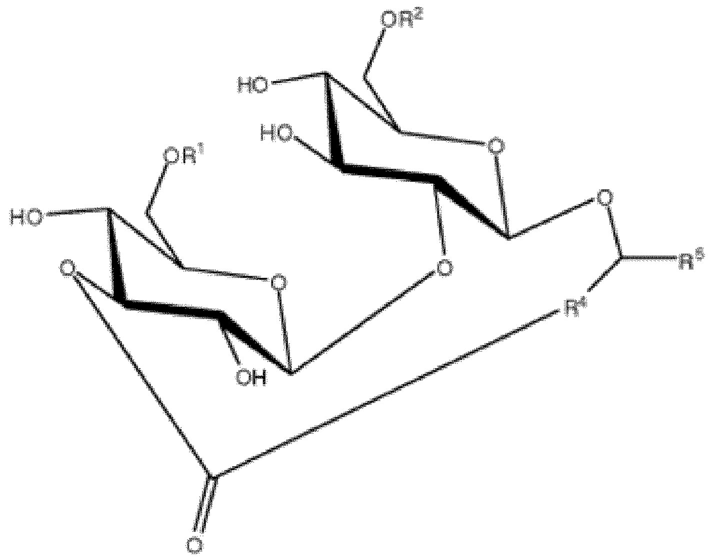

Formule 1a

où

$R^1$ et $R^2$ représentent indépendamment l'un de l'autre soit H, soit un groupe acétyle,
$R^3$ est H, un groupe méthyle, éthyle ou hexyle,
$R^4$ représente chaque fois indépendamment un groupe organique saturé ou insaturé divalent/à deux liaisons, ramifié ou non ramifié,
$R^5$ est H ou un groupe méthyle, étant entendu que le nombre total des atomes de carbone dans les groupes $R^4$ et $R^5$ n'excède pas le nombre 29.

**13.** Procédé pour la préparation d'une forme lactone solubilisée des sophorolipides, **caractérisé en ce qu'**on met en solution la forme lactone au moyen d'acides gras présents en ajustant le pH à 6-8, étant entendu que les acides gras sont choisis dans le groupe constitué par l'acide nonanoïque (acide pélargonique), l'acide décanoïque (acide caprique), l'acide dodécanoïque (acide laurique), l'acide tétradécanoïque (acide myristique), l'acide hexadécanoïque (acide palmitique), l'acide octadécanoïque (acide stéarique), l'acide octadécénoïque (acide oléique) ou des mélanges de ceux-ci.

**14.** Composition contenant la forme lactone solubilisée d'un sophorolipide, préparée selon le procédé de la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20050266036 A
- US 20050266036 A1
- US 6734141 B
- EP 1953237 A1
- US 2007027106 A1
- US 2005164955 A1
- US 4197166 A
- US 2005046426 W
- WO 2006069175 A
- US 4216311 A


### In der Beschreibung aufgeführte Nicht-Patentliteratur


- Pesticide Formulation and Adjuvant Technology. CRC Press LLC, 1996, 323-349
- **YOO DS ; LEE BS ; KIM EK.** Characteristics of microbial biosurfactant as an antifungal agent against plant pathogenic fungus. *J Microbiol Biotechnol,* 2005, vol. 15, 1164-1169
- **COLBY S.R.** Calculating synergistic and antagonistic responses of herbicide combinations. *Weeds,* 1967, vol. 15, 20-22
- The Pesticide Manual. The British Crop Protection Council, 2006
- The Manual of Biocontrol Agents. The British Crop Protection Council angegeben, 2001
- **MUKHERJEE, S. et al.** Towards commercial production of biosurfactants. *Trends in Biotechnology,* 2006, vol. 24 (11
- **K. MUTHUSAMY et al.** Properties, commerical production and applications. *Current Science,* 2008, vol. 94 (6), 736-747
- **BOEGART et al.** Microbial production and application of sophorolipids. *Applied Microbiology and Biotechnology,* 2006, vol. 76
- **BISHT, K.S. et al.** Enzymemediated regioselective acylation of SLs. *The journal of organic chemistry,* 1999, vol. 64, 780-789
- **AZIM, A. et al.** Amino acid conjugated sophorolipids. *Bioconjugate Chemistry,* 2006, vol. 17, 1523-1529
- **DESAI JD ; BANAT IM.** Microbial Production of Surfactants and their Commercial Potential. *Mycrobiology and Molicular Biology Reviews,* Marz 1997, 47-64
- Effects of biosurfactants on remediation of soils contaminated with pesticides. *Master Thesis Özlem Zenginyürrek, Izmir 2002, Izmir Institute of Technology,* 2002
- *Food Technology and Biotechnology,* 2001, vol. 39 (4), 295-304
- **K. KIM.** *Al.Journal of Microbiology and Biotechnology,* 2002, vol. 12 (2), 235-241
- **I. VAN BOGAERT.** *Appl. Microbiol Biotechnology,* 2007, vol. 76, 23-34
- The Manual of Biocontrol Agents. The British Crop Protection Council, 2004